# EUROPÄISCHE PATENTSCHRIFT

(11) **EP 2 526 597 B1**
(45) Veröffentlichungstag und Bekanntmachung des Hinweises auf die Patenterteilung: **20.04.2016**
(21) Anmeldenummer: 10700558.9
(22) Anmeldetag: 18.01.2010
(51) Int. Cl.: H02B 13/035, H02B 13/045

(54) **KAPSELUNGSBAUSTEIN MIT TRENNSCHALTERN FÜR EINE GASISOLIERTE SCHALTANLAGE**
ENCAPSULATING MODULE WITH DISCONNECTORS FOR A GAS-INSULATED SWITCHGEAR
MODULE D'ENCAPSULAGE AVEC DES SECTIONNEURS DESTINE A UN EQUIPEMENT ELECTRIQUE

(43) Veröffentlichungstag der Anmeldung: 28.11.2012
(73) Patentinhaber: ABB Technology AG, 8050 Zürich (CH)
(72) Erfinder: SOLOGUREN-SANCHEZ, Diego, CH-5430 Wettingen (CH); BOLLI, Tilo, CH-3658 Merligen (CH); HOLAUS, Walter, CH-8047 Zürich (CH)
(74) Vertreter: ABB Patent Attorneys
(86) Internationale Anmeldenummer: PCT/EP2010/050514
(87) Internationale Veröffentlichungsnummer: WO 2011/085820

(56) Entgegenhaltungen:
- EP-A1- 0 204 082
- EP-A1- 1 054 493
- EP-A2- 0 291 762
- WO-A1-2010/133692
- DE-A1-102006 062 540
- US-A- 3 665 135

## Beschreibung

Aspekte der Erfindung liegen auf dem Gebiet der Schaltanlagen, insbesondere der gasisolierten Hochspannungs-Schaltanlagen (auch als GIS bezeichnet), und betreffen ein Schaltanlagenmodul für eine Schaltanlage, insbesondere mit einem Gehäuse mit einem gemeinsamen Gasraum zur Aufnahme eines Isoliergases und von drei gasisolierten Sammelschienen-Leiterabschnitten. Weitere Aspekte der Erfindung betreffen eine Schaltanlage mit einem Schaltanlagenmodul.

Bei typischen gasisolierten Hochspannungsanlagen ist eine modulare Bauweise der Funktionsgruppen wie Leistungsschalter, Erdschalter usw. eines Schaltfelds bekannt. Ein Schaltfeld wird hier allgemein als Feld einer Schaltanlage verstanden und kann z.B. auch ein Abgangsfeld bezeichnen. Bei den auf dem Markt befindlichen GIS-Schaltanlagen werden GIS, deren Schaltfelder eine einphasig gekapselte Führung der Primärleiter aufweisen, grundsätzlich von GIS, deren Schaltfelder eine dreiphasig gekapselte Führung der Primärleiter aufweisen, voneinander unterschieden. Unter einphasiger Kapselung wird eine Kapselung, die einen eigenen Gasraum für jeden der Primärleiter vorsieht, verstanden, während unter dreiphasiger Kapselung die Anordnung dreier Primärleiter in einem gemeinsamen Gasraum verstanden wird. Unter Primärleitern werden Leiter verstanden, welche eine Nennlast im Hochspannungsbereich aufweisen.

Die Art der Kapselung (ein- oder dreiphasig) ist hauptsächlich durch die angestrebte Nennspannung bedingt: Einphasig gekapselte Schaltfelder (Felder) erlauben bei vergleichbarem Aufwand eine deutlich höhere Nennspannung. Weiter hat die Art der Kapselung grundlegende Auswirkungen auf das Layout der Felder und auf die Gestaltung und Anordnung der modularen Funktionsgruppen. Ein Vertreter eines Gehäuses für eine dreiphasig gekapselte Führung der Primärleiter ist beispielsweise in der WO 2008/022893 A1 beschrieben.

Um eine gasisolierte Unterstation zu realisieren, werden typischerweise mindestens zwei Felder eingangsseitig oder ausgangsseitig mit einer sogenannten Sammelschiene verbunden. Dabei umfasst der Begriff Sammelschiene sowohl ein- als auch dreifach gekapselt geführte Primärleiterschienen. Somit werden auch bezüglich der Sammelschiene GIS mit einphasig gekapselter Sammelschienen-Führung grundsätzlich von GIS mit dreiphasig gekapselter Sammelschienen-Führung unterschieden.

Da GIS häufig auch in Ballungsgebieten oder anderen räumlich beengten Gebieten eingesetzt werden, kommt neben der Leistungsfähigkeit auch der Kompaktheit einer Unterstation eine wichtige Bedeutung zu. Um diese beiden Anforderungen zu bedienen, ist es angestrebt, die Leistungsdichte (pro Bauvolumen) eines GIS-Schaltfelds zu erhöhen. Auch der Wartungsfreundlichkeit einer GIS-Schaltanlage kommt eine Bedeutung zu.

EP 0 204 082 A1 offenbart das Oberbegriff des Anspruchs 1.

Vor diesem Hintergrund wird ein Schaltanlagenmodul gemäß Anspruch 1 und eine Schaltanlage gemäß Anspruch 28 vorgeschlagen. Weitere Vorteile, Merkmale, Aspekte und Details der Erfindung sowie bevorzugte Ausführungen und besondere Aspekte der Erfindung ergeben sich aus den Unteransprüchen, der Beschreibung und den Figuren.

Gemäß einem Aspekt der Erfindung wird ein Schaltanlagenmodul für eine Schaltanlage vorgeschlagen. Das Schaltanlagenmodul hat ein Gehäuse, das einen gemeinsamen Gasraum zur Aufnahme eines Isoliergases für das Schaltanlagenmodul bildet, und umfasst: eine Sammelschienen-Leiteranordnung umfassend drei in dem gemeinsamen Gasraum aufgenommene Sammelschienen-Leiterabschnitte; eine Abgangsleiter-Anschlussgruppe mit drei Abgangsleiter-Öffnungen und mit drei sich von innerhalb des Gehäuses zu einer jeweiligen der Abgangsleiter-Öffnungen hin erstreckenden Abgangs-Leiterabschnitten; und drei Trennschalter, welche jeweils über eine Trennstelle einen jeweiligen der Sammelschienen-Leiterabschnitte mit einem jeweiligen der Abgangsleiterabschnitte verbinden (d.h. wahlweise verbinden). Durch die drei Abgangsleiter-Öffnungen ist eine Abgangs-Normalebene dadurch definiert, dass die Abgangs-Normalebene parallel zu den Mittelsenkrechten der Abgangsleiter-Öffnungen ist. Die Trennstellen sind räumlich so angeordnet, dass zumindest die Trennstelle eines ersten der Trennschalter auf einer ersten Seite der Abgangs-Normalebene angeordnet ist und die Trennstelle eines zweiten der Trennschalter auf einer zweiten, der ersten Seite gegenüberliegenden Seite der Abgangs-Normalebene angeordnet ist. Gemäß einem Aspekt ist die Abgangs-Normalebene (dann auch als Abgangs-Normal-Mittelebene bezeichnet) dadurch definiert, dass die Abgangs-Normalebene die Mittelsenkrechten der Abgangsleiter-Öffnungen enthält.

Ein Vorteil zumindest einiger Aspekte der Erfindung liegt darin, dass durch die Anordnung der Trennstellen auf verschiedenen Seiten der Abgangs-Normalebene ein erhöhter Abstand zwischen diesen Trennstellen ermöglicht wird. Dadurch führt die Spannungsdifferenz zwischen diesen Trennstellen zu einem verringerten elektrischen Feld. Dies ist auch deswegen vorteilhaft, da an den Trennstellen besonders hohe elektrische Felder auftreten können und diese daher einen für die elektrische Abschirmung besonders kritischen Teil darstellen. Die Anordnung der Trennstellen erlaubt somit insgesamt eine verbesserte elektrische Abschirmung der drei Abgangs-Phasenleiterabschnitte gegeneinander, ohne auf Vorteile einer dreiphasig gekapselten Anordnung, wie eine kompakte Bauweise, verzichten zu müssen. Auch ist aufgrund der verbesserten elektrischen Abschirmung eine kompaktere Bauweise und / oder eine höhere Spannung ermöglicht. Insgesamt tragen Aspekte der Erfindung somit zu einem leistungsfähigen Schaltanlagenmodul mit guter elektrischer Abschirmung bei gleichzeitiger kompakter Bauweise bei.

Ein weiterer Vorteil zumindest einiger Aspekte der Erfindung liegt darin, dass durch die Abgangsleiter-Öffnungen eine zumindest teilweise einphasig gekapselte Struktur ermöglicht wird, die auch für hohe Hochspannungen einsetzbar ist. Die Vorteile einer einphasig gekapselten Primärleiterführung, wie etwa der Modularität und Vielseitigkeit der Teile, werden zusätzlich mit Vorteilen einer dreiphasig gekapselten Modulbauweise vereinigt. So ist etwa durch den gemeinsamen Gasraum eine vereinfachte Überwachung des Gasdrucks und insgesamt eine Reduktion des Gehäusematerials und des erforderlichen Gasvolumens ermöglicht. Auch sind nur eine einzige Befüllung mit Isoliergas, eine einzige Überwachung des Gases und eine einzige Überdruckschutzmechanik erforderlich. Dadurch, dass das Gehäuse mehrere Funktionen des Moduls (Abzweigung von einer Sammelschiene und Trennschalter) erfüllt, ist außerdem eine Reduzierung der Kosten möglich. Zusätzlich wird ein Modul nicht nur mit geringen äußeren Abmessungen, sondern auch mit geringem Innenvolumen ermöglicht, so dass auch das Schutzgas-Füllvolumen reduziert werden kann. Zur potentiell platzsparenden Bauweise trägt zusätzlich bei, dass die Primäranschlüsse nahe zueinander angeordnet werden können.

Ein weiterer Vorteil liegt in der flexiblen Verwendbarkeit des Schaltanlagenmoduls im Rahmen eines modularen Systems. Beispielsweise kann das Schaltanlagenmodul in Rahmen eines Doppel-Sammelschienensystems, eines Einfach-Sammelschienensystems oder eines Ring-Sammelschienensystems und/oder als Brückenmodul eingesetzt werden. Unter Modularität wir die vielseitige Verwendbarkeit des Gehäuses verstanden. Das Schaltanlagenmodul eignet sich für alle Arten von Schaltfeldern, auch für Koppelfelder. Das Schaltanlagenmodul ist in mehreren Richtungen (z.B. x- und y-Richtung) erweiterbar und ermöglicht daher vernetzte Strukturen entlang mehrere Richtungen. Dabei sind übersichtliche Feld-Layouts möglich, da alle drei Phasen parallel geführt werden. Die Richtung eines Leiter-Bündels von drei Phasenleitern kann ohne Schwierigkeiten umgelenkt werden.

Gemäß einem Aspekt wird ein orthogonales x-y-z-Bezugssystem dadurch definiert, dass die erste Gerade die z-Richtung definiert. Gemäß einem Aspekt definiert die zweite Gerade eine zur z-Richtung senkrechte y-Richtung, und damit auch eine zur z- und y-Richtung senkrechte x-Richtung.

Im Weiteren soll die Erfindung anhand von in Figuren dargestellten Ausführungsbeispielen erläutert werden, aus denen sich weitere Vorteilteile und Abwandlungen ergeben. Dazu zeigen:
Fig. 1a und 1b zeigen jeweils eine perspektivische Ansicht eines Gehäuses, das für ein Schaltanlagenmoduls gemäß einer Ausführungsform der Erfindung gestaltet ist;
Fig. 2a und 2b zeigen weitere frontale bzw. seitliche Ansichten des Schaltanlagenmodul-Gehäuses;
Fig. 3a bis 3c zeigen seitliche Querschnitte des Schaltanlagenmodul-Gehäuses;
Fig. 4a zeigt eine Ansicht des Schaltanlagenmodul-Gehäuses von oben;
Fig. 4b zeigt eine horizontale Querschnitts-Ansicht des Schaltanlagenmodul-Gehäuses;
Fig. 5 zeigt ein Teil eines weiteren Schaltanlagenmodul-Gehäuses;
Fig. 6 zeigt eine perspektivische Querschnittsansicht eines Schaltanlagenmoduls gemäß einer Ausführungsform der Erfindung mit geöffneten Trennschaltern
Fig. 7a bis 7c zeigen seitliche Querschnitte des Schaltanlagenmoduls von Fig. 6; und
Fig. 8 zeigt eine perspektivische Querschnittsansicht des Schaltanlagenmoduls von Fig. 6 mit geschlossenen Trennschaltern.
Im Allgemeinen und nicht beschränkt auf die vorliegende Ausführungsform werden nun einzelne Ausführungsformen mit Bezug auf die Figuren beschrieben. Die Klarheit der Figuren wird erreicht, indem auf eine Schraffur der Schnittflächen in den Schnittdarstellungen zugunsten der Übersichtlichkeit situativ verzichtet worden ist. Zwecks einer besseren Verständlichkeit der Beschreibung sollen sich die Begriffe "obere", "untere", "linke", "rechts", "vorne", "horizontal", "vertikal" sowie Abwandlungen davon lediglich bezüglich den in den Figuren dargestellten Ausrichtungen der Gegenstände beziehen.

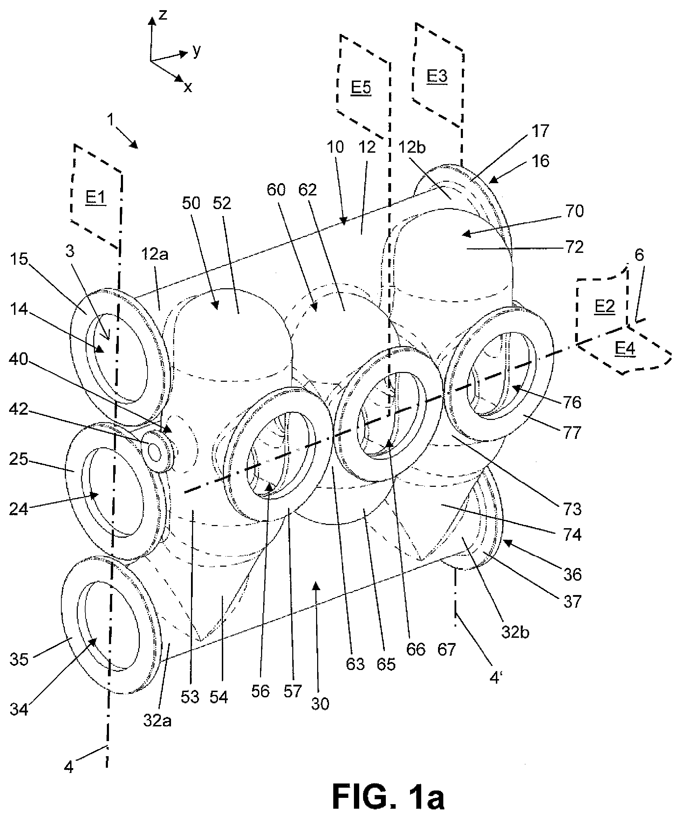

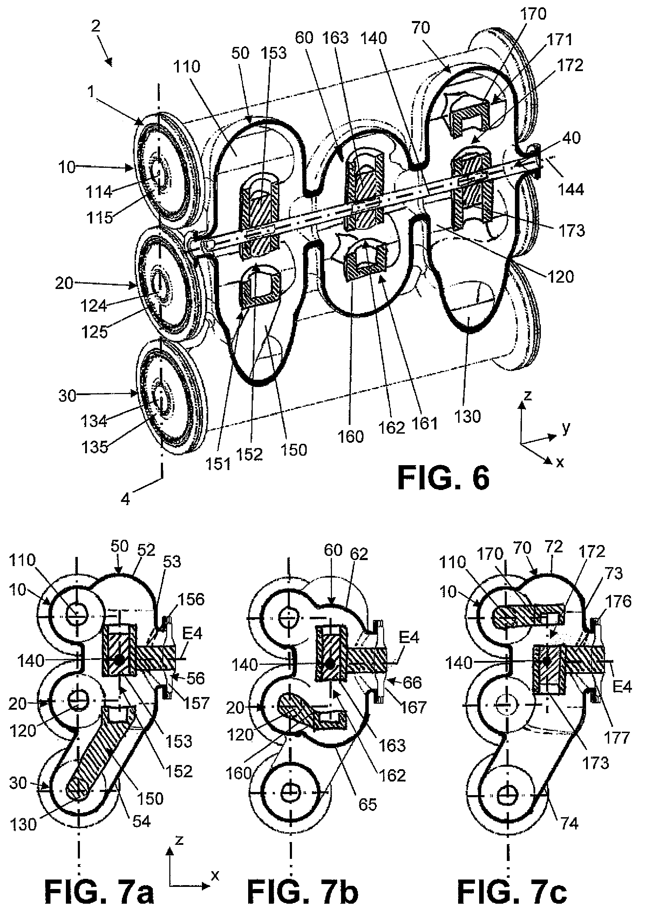

Fig. 1a bis 4b zeigen verschiedene Ansichten eines Gehäuses 1 für ein Schaltanlagenmodul gemäß einer repräsentativen Ausführungsform der Erfindung. Das zugehörige Schaltanlagenmodul 2 ist in Fig. 6 bis 8 dargestellt und weiter unten beschrieben. Das Gehäuse 1 wird im Folgenden unter Bezugnahme auf diese Figuren gemeinsam beschrieben, unter Verwendung des ebenfalls in den Figuren dargestellten orthogonalen x-y-z-Koordinatensystems.

Das Schaltanlagenmodul-Gehäuse 1 weist drei Sammelschienen-Gehäuseabschnitte 10, 20, 30 auf. Der obere Sammelschienen-Gehäuseabschnitt 10 erstreckt sich längs in y-Richtung von einer oberen ersten Sammelschienen-Öffnung 14 zu einer oberen, zweiten Sammelschienen-Öffnung 16. Der obere Sammelschienen-Gehäuseabschnitt 10 weist einen mittleren rohrförmigen Gehäuseabschnitt 12 und zwei endseitig angeordnete Rohrstummel 12a und 12b, eine obere erste Sammelschienen-Öffnung 14, eine obere zweite Sammelschienen-Öffnung 16, einen die obere erste Sammelschienen-Öffnung 14 umgebenden Flansch 15, und einen die obere zweite Sammelschienen-Öffnung 16 umgebenden Flansch 17 auf.

Auch der mittlere und der untere Sammelschienen-Gehäuseabschnitt 20 bzw. 30 erstrecken sich in y-Richtung zwischen entsprechenden mittleren bzw. unteren ersten und zweiten Sammelschienen-Öffnungen 24 und 26 bzw. 34 und 36, und weisen jeweils zylinderartige Gehäuseabschnitte (z.B. Gehäuseabschnitt 32), Rohrstummel 22a und 22b bzw. 32a und 32b sowie Flansche 25 und 27 bzw. 35 und 37 auf, die die jeweiligen Sammelschienen-Öffnungen 24 und 26 bzw. 34 und 36 umgeben. Die Beschreibung des oberen Sammelschienen-Gehäuseabschnitts 10 und seiner Komponenten gilt für die Sammelschienen-Gehäuseabschnitte 20 und 30 entsprechend. Die Zylinderachsen der Gehäuseabschnitte 11, 21 und 31 erstrecken sich parallel zueinander in y-Richtung. Die Zylinderachsen sind in z-Richtung übereinander angeordnet, so dass sie gemeinsam in einer y-z-Ebene liegen.

Die jeweiligen Sammelschienen-Öffnungen 14, 16 bzw. 24, 26 bzw. 34, 36 sind konzentrisch zur jeweiligen Zylinderachse an einander gegenüberliegenden Stirnflächen der jeweiligen Gehäuseabschnitte 11, 21, 31 angeordnet. Die auf der einen Seite des Gehäuses angeordneten Sammelschienen-Öffnungen 14, 24 und 34 (auch als erste Sammelschienen-Öffnungen bezeichnet) bilden eine erste Sammelschienen-Anschlussgruppe. Entsprechend bilden die auf der gegenüberliegenden Seite des Gehäuses angeordneten Sammelschienen-Öffnungen 16, 26 und 36 (auch als zweite Sammelschienen-Öffnungen bezeichnet) eine zweite Sammelschienen-Anschlussgruppe.

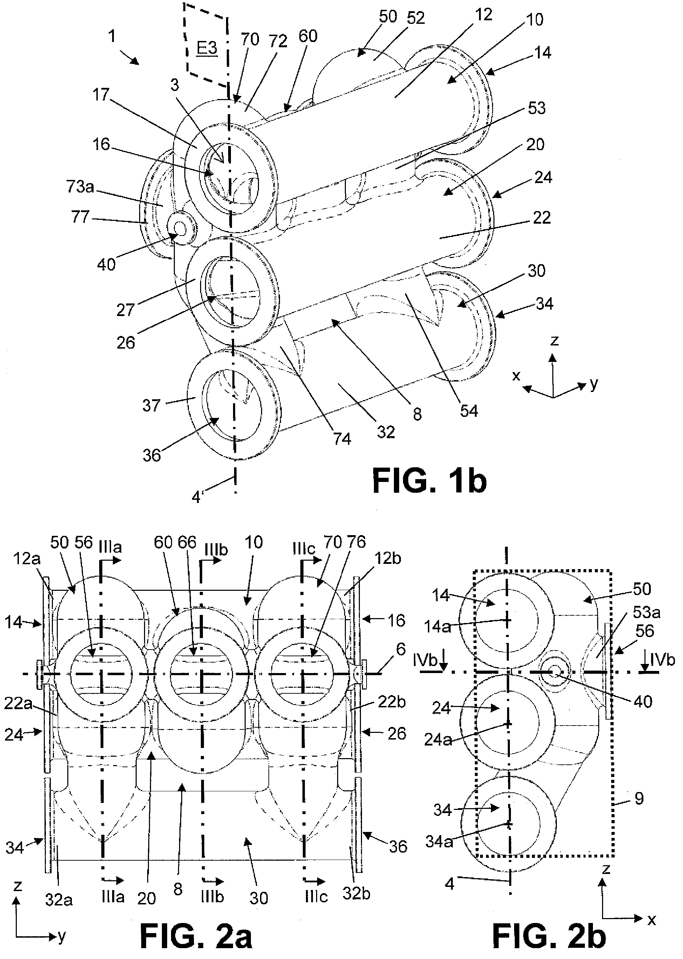

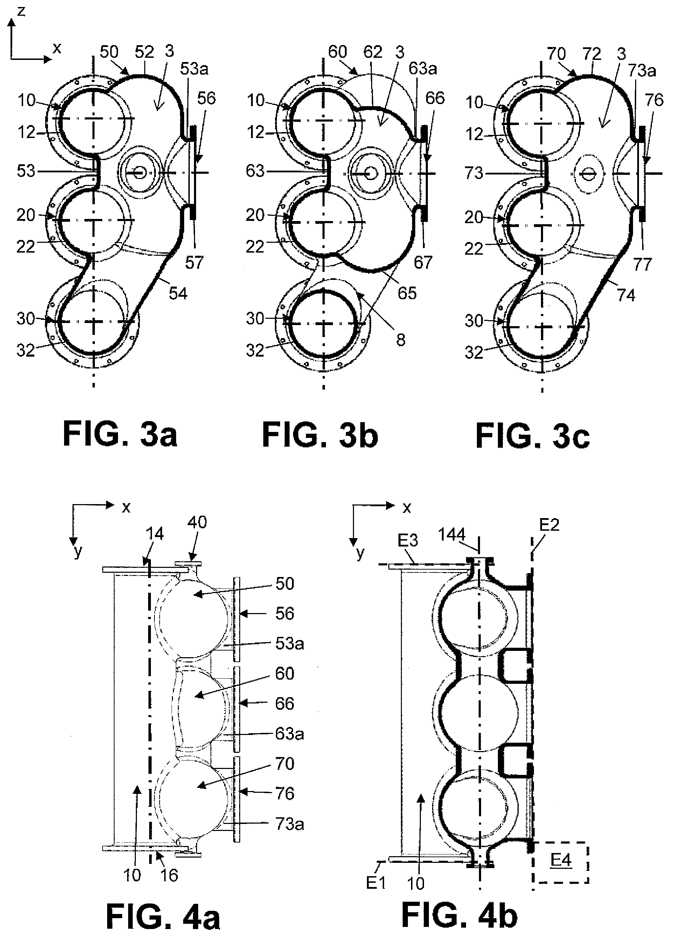

Das Schaltanlagenmodul-Gehäuses 1 weist weiter einen zylinderartigen Betätigungswellen-Gehäuseabschnitt 40 auf. Der Betätigungswellen-Gehäuseabschnitt 40 ist konzentrisch zu einer Zylinderachse bzw. Betätigungsachse 144 gestaltet (siehe Fig. 4b), die parallel zu der zweiten Gerade 6 verläuft. Der Betätigungswellen-Gehäuseabschnitt 40 weist weiter ein hervorstehendes Betätigungswellen-Endstück 42 auf, um im Betrieb des Gehäuses 1 die Betätigung von im Gasraum 3 angeordneten Schaltelementen zu ermöglichen. Das Betätigungswellen-Endstück 42 ist konzentrisch zur Zylinderachse bzw. Betätigungsachse 144 des Betätigungswellen-Gehäuseabschnitts 40 an dessen Stirnfläche angebracht. Wie in Fig. 1b sichtbar ist, ist auch an der gegenüberliegenden Stirnfläche ein entsprechendes Betätigungswellen-Endstück dargestellt. Beide Betätigungswellen-Endstücke sind geschlossen. In anderen Ausführungsformen weist zumindest eines dieser Betätigungswellen-Endstücke eine Betätigungswellen-Öffnung auf, durch die die Betätigungswelle aus dem Gehäuse herausgeführt wird oder eine Antriebswelle für die Betätigungswelle in das Gehäuse hineingeführt wird. An dem Betätigungswellen-Endstück 42 sind Befestigungsmittel zur Befestigung einer Betätigungsvorrichtung zum Antrieb der Betätigungswelle angebracht (nicht dargestellt).

Das Schaltanlagenmodul-Gehäuses 1 weist weiter eine Abgangsleiter-Anschlussgruppe auf. Die Abgangsleiter-Anschlussgruppe hat einen ersten Leiterabgangs-Gehäuseabschnitt 50 mit einem sich in z-Richtung erstreckenden zylinderartigen Gehäuseabschnitt 53, der nach oben von einem Oberen Endstück 52 und nach unten von einem Übergangs-Stück 54 begrenzt wird. Ein zylinderartiger Rohrstummel 53a erstreckt sich seitlich in x-Richtung (Richtung der Zylinderachse des Rohrstummels) von dem zylinderartigen Gehäuseabschnitt 53 weg. Unter einem Rohrstummel wird ein rohrförmiges Endstück verstanden, wobei rohrförmig bedeutet, dass das Stück ein Hohlprofil aufweist. Der Rohrstummel 53a mündet in einer Abgangsleiter-Öffnung 56. Die Abgangsleiter-Öffnung 56 weist einen Flansch 57 auf, der sie umgibt.

In entsprechender Weise hat die Abgangsleiter-Anschlussgruppe auch einen zweiten und dritten Leiterabgangs-Gehäuseabschnitt 60, 70, die jeweils einen zylinderartigen Gehäuseabschnitt 63 bzw. 73 und ein jeweiliges Oberes Endstück 62 bzw. 72 aufweisen. Jeweilige Rohrstummel 63a bzw. 73a erstrecken sich seitlich in x-Richtung von den jeweiligen zylinderartigen Gehäuseabschnitten 63 bzw. 73 weg und münden in jeweiligen Abgangsleiter-Öffnungen 66 bzw. 76. Die Abgangsleiter-Öffnungen 66 bzw. 76 sind von jeweiligen Flanschen 67 bzw. 77 umgeben. Während der dritte Leiterabgangs-Gehäuseabschnitt 70 ebenfalls ein Übergangs-Stück 74 entsprechend dem ersten Übergangs-Stück 54 aufweist, fehlt dem zweiten Leiterabgangs-Gehäuseabschnitt 60 ein solches Übergangs-Stück. Stattdessen wird der zweite Leiterabgangs-Gehäuseabschnitt 60 nach unten von einem unteren Endstück 65 begrenzt.

Im Folgenden werden die Anordnung und einige Eigenschaften der verschiedenen Teile des in Fig. 1a und 1b gezeigten Schaltanlagenmoduls beschrieben. Einzelne Aspekte dieser Beschreibung stellen allgemeine Aspekte der Erfindung dar, gemäß denen unabhängig von den Details des in Fig. 1a und 1b gezeigten Schaltanlagenmoduls auch weitere Ausführungsformen gestaltet werden können. Zunächst werden die die Anordnung und einige Eigenschaften der Sammelschienen-Gehäuseabschnitte 10, 20, 30 und ihrer Teile beschrieben.

Die Sammelschienen-Öffnungen 14, 24 und 34 (auch als erste Sammelschienen-Öffnungen bezeichnet) sind flächenmäßig in einer ersten Öffnungs-Ebene E1 angeordnet. Dies bedeutet, dass die von den Umrandungen der drei ersten Sammelschienen-Öffnungen 14, 24 und 34 definierten jeweiligen Öffnungs-Flächen jeweils flächenmäßig in der ersten Öffnungs-Ebene E1 liegen. Diese Öffnungs-Ebene E1 ist eine x-z-Ebene, d.h. eine sich in x-und z-Richtung erstreckende Ebene. Die Sammelschienen-Öffnungen 14, 24 und 34 sind weiter entlang einer ersten Geraden 4 angeordnet, d.h. jeweilige Mitten 14a, 24a, 34a der Öffnungen 14, 24, 34 (bzw. ihrer Öffnungs-Flächen) liegen auf dieser ersten Geraden 4, wie etwa in Fig. 2b besonders gut sichtbar ist.

Die drei zweiten Sammelschienen-Öffnungen 16, 26 und 36 sind auf einer den drei ersten Sammelschienen-Öffnungen 14, 24, 34 direkt gegenüberliegenden Seite des Gehäuses angeordnet. Die zweiten Sammelschienen-Öffnungen 16, 26 und 36 sind flächenmäßig in einer weiteren Ebene E3 angeordnet. Die Ebene E3, auch als dritte Öffnungs-Ebene bezeichnet, ist ebenfalls eine x-z-Ebene und somit parallel zur ersten Öffnungs-Ebene E1. Die zweiten Sammelschienen-Öffnungen 16, 26 und 36 sind ferner entlang einer dritten Geraden 4', die parallel zur ersten Gerade 4 verläuft, angeordnet.

Die ersten Sammelschienen-Öffnungen 14, 24, 34 sind jeweils zur y-Richtung hin gerichtet, d.h. ihre Normale (Normale zur Öffnungs-Ebene) erstreckt sich in y-Richtung. Die ersten Sammelschienen-Öffnungen 14, 24, 34 definieren eine erste Sammelschienen-Normalebene (y-z-Ebene), die von der ersten Gerade 4 und den zueinander parallelen Normalen der Öffnungen 14, 24, 34 aufgespannt wird, so dass diese Normalen allesamt in der Sammelschienen-Normalebene liegen. Anders ausgedrückt sind die ersten Sammelschienen-Öffnungen 14, 24, 34 so angeordnet, dass Sammelschienen-Leiter, die die Öffnungen zentral und senkrecht (d.h. parallel zu der Normalen) verlassen, in dieser Sammelschienen-Normalebene liegen. Die von den zweiten Sammelschienen-Öffnungen 16, 26, 36 in entsprechender Weise definierte zweite Sammelschienen-Normalebene ist mit der von den ersten Sammelschienen-Öffnungen 14, 24, 34 definierten Sammelschienen-Normalebene identisch, nämlich die y-z-Ebene, die die Geraden 4 und 4' enthält. Somit können in dieser Sammelschienen-Normalebene liegende Sammelschienen-Leiter das Gehäuse 1 geradlinig durchtreten.

Eine jede der drei zweiten Sammelschienen-Öffnungen 16, 26, 36 ist paarweise gegenüber einer jeweiligen der drei ersten Sammelschienen-Öffnungen 14, 24, 34 angeordnet. Dadurch werden drei Sammelschienen-Öffnungs-Paare (14, 16), (24, 26) und (34, 36) gebildet, zwischen denen jeweils einer der Sammelschienen-Gehäuseabschnitte 10, 20 bzw. 30 liegt. Diese Anordnung ermöglicht die Aufnahme eines jeweiligen durchgehenden geraden Sammelschienen-Leiterabschnitts zwischen den Sammelschienen-Öffnungen des jeweiligen Paars. Der Sammelschienen-Leiterabschnitt erstreckt sich in y-Richtung, d.h. senkrecht zur ersten und zur dritten Öffnungs-Ebene E1 und E3.

Die Sammelschienen-Gehäuseabschnitte 10, 20, 30 definieren jeweilige zylinderartige Innenvolumen oder Gasraumabschnitte. Die Innenvolumen sind Teil des gemeinsamen Gasraums und stehen mit dessen weiteren Teilen und miteinander in fluider (hydraulischer) Verbindung. Da das Gehäuse zur Aufnahme eines Isoliergases dient, wird nachfolgend unter ,fluid' auch ein Gas verstanden. Die jeweiligen Zylinder-Achsen dieser Innenvolumens erstrecken sich in y-Richtung. Die jeweiligen Zylinder-Achsen sind insbesondere durch die rohrförmigen Längsabschnitte 12, 22, 32 und die Rohrstummel 12a, 12b, 22a, 22b und 32a, 32b definiert, die konzentrisch zu den jeweiligen Zylinder-Achsen angeordnet sind. Jedes der drei Sammelschienen-Öffnungs-Paare (14, 16), (24, 26) und (34, 36) begrenzt somit einen sich dazwischen erstreckenden, zylinderförmigen Gasraumabschnitt des Gasraums stirnseitig. Die zylinderartigen Gasraumabschnitte (mit zumindest abschnittsweise im Wesentlichen kreisförmigem Querschnitt) erstrecken sich jeweils entlang der jeweiligen Zylinder-Achse. In alternativen Ausführungsformen (nicht dargestellt) kann der Querschnitt der Gasraumabschnitte auch oval oder ungleichförmig sein. In diesem weisen die Sammelschienen-Gehäuseabschnitte 10, 20, 30 und deren Gasraumabschnitte statt einer Zylinder-Achse eine gerade Längsachse auf.

Die Sammelschienen-Gehäuseabschnitte 10, 20 und 30 sind voneinander beabstandet angeordnet. Dies bedeutet, dass der Abstand zwischen den Zylinderachsen größer ist als der Zylinder-Durchmesser bzw. als der doppelte Krümmungs-Radius der Sammelschienen-Gehäuseabschnitte 10, 20 bzw. 30. Der Zylinder-Durchmesser bzw. Krümmungs-Radius ist durch die Gehäuse-Außenseite vorgegeben. Die drei Sammelschienen-Gehäuseabschnitte 10, 20, 30 sind in einem gleichmäßigen Abstand zueinander entlang der ersten Gerade 4 in z-Richtung aufgereiht.

Die drei ersten Sammelschienen-Öffnungen 14, 24, 34 dienen zur separaten Aufnahme von jeweils einem von drei gasisolierten Sammelschienen-Leiterabschnitten der Schaltanlage. Ebenso dienen die drei zweiten Sammelschienen-Öffnungen 16, 26, 36 zur separaten Aufnahme jeweils eines der drei Sammelschienen-Leiterabschnitte. Die Sammelschienen-Öffnungen könnte man daher auch als Sammelschienen-Leiter-Öffnungen bezeichnen. Unter separater Aufnahme ist hierbei zu verstehen dass die Sammelschienen-Leiter jeweils einphasig in den jeweiligen Öffnungen angeordnet sind, insbesondere durch einen einphasigen Isolator durchführend angeordnet sind.

Die Sammelschienen-Öffnungen 14, 16, 24, 26, 34 und 36 sind jeweils an einer Stirnfläche eines jeweiligen separaten, also eigens zugeordneten Rohrstummels 12a, 12b, 22a, 22b, 32a bzw. 32b angeordnet und über diesen mit einer Hauptkammer des gemeinsamen Gasraums verbunden. Die Rohrstummel sind voneinander beabstandet, d.h. nicht miteinander verschmolzen.

Die Sammelschienen-Öffnungen 14, 24, 34 und 16, 26 und 36 sind umfangsseitig/ umfangsmäßig von jeweiligen Flanschen 15, 25, 35 und 17, 27, 37 umgeben. Die Flansche sind durch Rohrstummel 12a, 12b, 22a, 22b, 32a, 32b von einem Wandabschnitt der Hauptkammer beabstandet und als eigenständige Flansche gestaltet. Jede der Sammelschienen-Öffnungen weist einen eigenen separaten Flansch auf, d.h. die Flansche sind voneinander beabstandet. Die Flansche 15, 25, 35 liegen in einer gemeinsamen Ebene, der ersten Offnungs-Ebene E1. Ebenso liegen die Flansche 17, 27, 37 in einer gemeinsamen Ebene, der dritten Öffnungs-Ebene E3. Wie in Fig. 3a bis 3c zu sehen ist, ist jeder der Flansche mit durchgehenden Schraubenlöchern für Befestigungsschrauben versehen, mit deren Hilfe ein Schott-Isolator oder ein Stütz-Isolator an dem jeweiligen Flansch befestigt werden kann. Je nach Anforderungen ist das Schraubenloch als Durchgangsloch oder als Gewindeloch realisiert. In den weiteren Figuren sind diese Schraubenlöcher vereinfachend nicht dargestellt, jedoch sind in allen Flanschen 15, 25, 35, 17, 27, 37 und 57, 67, 77 (siehe unten) solche Schraublöcher vorhanden, selbst wenn diese in einigen Figuren nicht dargestellt sind. Schott-Isolatoren, durch sie durchtretende Leiter, und weitere solche Elemente gehören nicht zum Gehäuse im engeren Sinne und sind in den Fig. 1 bis 4b nicht dargestellt. Diese Elemente sind in Fig. 6 dargestellt und weiter unten mit Bezug auf Fig. 6 detaillierter beschrieben.

Jeder der Flansche 15, 25, 35 ist am Ende eines jeweiligen der Rohrstummel 12a, 22a bzw. 32a angebracht und steht seitlich von dem jeweiligen Rohrstummel ab. Dadurch ist jeder der Flansche 15, 25, 35 von außerhalb des Gehäuses aus zugänglich, von einem Bereich hinter der jeweils zugehörigen Öffnung 14, 24, 34 aus. Dadurch sind die Befestigungsvorrichtungen für die Schott-Isolatoren von außerhalb des Gehäusevolumens zugänglich, und eine einfache Montage, Demontage und Wartung des Gehäuses 1 wird ermöglicht. Das oben Gesagte gilt entsprechend auch für die zweiten Sammelschienen-Öffnungen 16, 26, 36 (am Ende eines jeweiligen Rohrstummels 12b, 22b bzw. 32b angebracht) und für deren Flansche 17, 27, 37.

Im Folgenden werden die Anordnung und einige Eigenschaften der Abgangsleiter-Anschlussgruppe mit den Abgangsleiter-Öffnungen 56, 66, 76 und den Abgangsleiter-Gehäuseabschnitten 50, 60, 70 beschrieben. Die Abgangsleiter-Öffnungen 56, 66, 76 dienen zur separaten Aufnahme von jeweils einem von drei Abgangs-Leitern, genauer Abgangs-Nominalleitern der Schaltanlage. Die Abgangsleiter-Öffnungen 56, 66, 76 sind flächenmäßig in einer zweiten Öffnungs-Ebene E2 und entlang einer zweiten Gerade 6 angeordnet. Diese zweite Gerade 6 verläuft senkrecht zu den Geraden 4 und 4'. Die drei Abgangsleiter-Öffnungen 56, 66, 76 sind an einem jeweiligen der drei Abgangsleiter-Gehäuseabschnitte 50, 60, 70 angeordnet.

Die Abgangsleiter-Öffnungen 56, 66, 76 sind jeweils zur x-Richtung hin gerichtet, d.h. zu der zu den Geraden 4 und 6 senkrechten Richtung. Mit anderen Worten, die Normale der Abgangsleiter-Öffnungen 56, 66, 76 erstreckt sich in die x-Richtung. Somit definieren die Abgangsleiter-Öffnungen 56, 66, 76 eine Abgangs-Normalebene E4 (x-y-Ebene), die die zweite Gerade 6 enthält und die senkrecht auf der zweiten Öffnungs-Ebene E2 steht. Die Abgangs-Normalebene E4 ist somit die von der zweiten Gerade 6 und den zueinander parallelen Normalen der Abgangsleiter-Öffnungen 56, 66, 76 aufgespannte Ebene E4. Abgangs-Nominalleiter, die die Abgangsleiter-Öffnungen 56, 66, 76 zentral und senkrecht verlassen, liegen somit in der Abgangs-Normalebene E4. Die Abgangs-Normalebene E4 kann auch auf andere Weise definiert werden, z.B. als die Ebene, die senkrecht zur ersten Gerade 4 steht und die zweite Gerade 6 enthält. Allgemeiner wird hierin unter einer Abgangs-Normalebene nicht nur die Ebene E4 verstanden, sondern jede von den zueinander parallelen Normalen der Abgangsleiter-Öffnungen 56, 66, 76 aufgespannte Ebene, d.h. jede Ebene, die parallel zur Ebene E4 ist.

Die Abgangs-Normalebene E4 schneidet die weiter oben definierte Sammelschienen-Normalebene in einer Schnittlinie, die gegenüber jeder der Mittelachsen der Sammelschienen-Öffnungen 14, 24, 34 bzw. der zylinderartigen Sammelschienen-Gehäuseabschnitte 12, 22,32 in Richtung der ersten Geraden 4 (z-Richtung) versetzt ist. Die Schnittlinie ist zwischen zwei der Sammelschienen-Öffnungen 14, 24, 34 und somit außerhalb der Sammelschienen-Öffnungen 14, 24, 34 angeordnet. Die Abgangs-Normalebene ist mittig zwischen der Sammelschienen-Öffnung 14 und der Sammelschienen-Öffnung 24 angeordnet. Die Vorteile dieser Anordnung sind weiter unten in Bezug auf Fig. 6 beschrieben.

Jede der drei Abgangsleiter-Öffnungen 56, 66, 76 ist umfangsmäßig von einem jeweiligen Flansch 57, 67, 77 umgeben. Die Flansche sind am Ende eines jeweiligen der Rohrstummel 53a, 63a bzw. 73a angeordnet und liegen in einer gemeinsamen Ebene, der zweiten Öffnungs-Ebene E2 (y-z-Ebene). Abgesehen von diesem Unterschied und weiteren aus den Figuren 1 bis 4b ersichtlichen Unterschieden gilt für die Abgangsleiter-Öffnungen 56, 66, 76, die Rohrstummel 53a, 63a, 73a und die Flansche 57, 67, 77 das weiter oben für die entsprechenden Teile der ersten Sammelschienen-Öffnungen Geschriebene entsprechend.

In alternativen Ausführungsformen (nicht dargestellt) sind die Flansche der ersten Sammelschienen-Öffnungen und / oder der zweiten Sammelschienen-Öffnungen und / oder der Abgangsleiter-Öffnungen je nach Ausführungsform in einen gemeinsamen Wandabschnitt einer Hauptkammer des Gehäuses vollintegriert oder teilintegriert. Je nach Ausführungsform sind zumindest zwei der Flansche der ersten Sammelschienen-Öffnungen und / oder der zweiten Sammelschienen-Öffnungen und / oder der Abgangsleiter-Öffnungen zumindest zwei der Flansche miteinander zu einer Flansch-Gruppe verbunden. Beispielsweise können alle Flansche der ersten Sammelschienen-Öffnungen und / oder der zweiten Sammelschienen-Öffnungen und / oder der Abgangs-Öffnungen miteinander zu einer jeweiligen ersten Sammelschienen-Flansch-Gruppe und / oder zweiten Sammelschienen-Flansch-Gruppe und / oder Abgangs-Flansch-Gruppe verbunden sein.

Der Abgangsleiter-Gehäuseabschnitt 50 ist wurstartig geformt und umfasst einen zylindrischen Gehäuseabschnitt 53 mit sich in z-Richtung erstreckender Zylinderachse. Weiter umfasst der Abgangsleiter-Gehäuseabschnitt 50 ein abgerundetes oberes Endstück 52, das als Abschluss-Stück an einer oberen Stirnseite des Abgangsleiter-Gehäuseabschnitts 50 angebracht ist, und an der diesem gegenüberliegenden Stirnseite ein rohrartiges Übergangsstück 54. Der Abgangsleiter-Gehäuseabschnitt 50 weist zumindest abschnittsweise (nämlich im Abschnitt des Gehäuseabschnitts 53) ein zylinderartiges Innenvolumen auf. Der Abgangsleiter-Gehäuseabschnitt 50 ist so mit den Sammelschienen-Gehäuseabschnitten 10, 20, 30 verschmolzen, dass er deren Innenvolumina miteinander verbindet, wie in Fig. 3a genauer zu sehen ist. Der Abgangsleiter-Gehäuseabschnitt 70 ist entsprechend dem Abgangsleiter-Gehäuseabschnitt 50 gestaltet.

Der mittig angeordnete Abgangsleiter-Gehäuseabschnitt 60 ist ebenfalls größtenteils entsprechend dem Abgangsleiter-Gehäuseabschnitt 50 gestaltet, weist aber folgende Unterschiede auf: Statt einem Übergangsstück weist der Abgangsleiter-Gehäuseabschnitt 60 auch ein abgerundetes unteres Ende 65 auf. Der Abgangsleiter-Gehäuseabschnitt 50 ist daher so mit den Sammelschienen-Gehäuseabschnitten 10, 20 verschmolzen, dass er deren Innenvolumina direkt miteinander verbindet, wie in Fig. 3b genauer zu sehen ist. Von dem Sammelschienen-Gehäuseabschnitt 30 ist der Abgangsleiter-Gehäuseabschnitt 60 dagegen beabstandet (durch den Durchbruch 8 getrennt) und hat also keine direkte Verbindung mit ihm. Insgesamt verbinden die Abgangsleiter-Gehäuseabschnitte 50, 70 somit die Innenvolumina der drei Sammelschienen-Gehäuseabschnitte 10, 20, 30 direkt miteinander, und der Abgangsleiter-Gehäuseabschnitt 60 verbindet die Innenvolumina von zweien der Sammelschienen-Gehäuseabschnitte 10 und 20 direkt miteinander.

In alternativen Ausführungsformen (nicht dargestellt) können die Abgangsleiter-Gehäuseabschnitte 50, 60, 70 auch andere Längen und Anordnungen in z-Richtung aufweisen, so dass sie andere Kombinationen der Sammelschienen-Gehäuseabschnitte direkt miteinander verbinden. Beispielsweise ist in einer solchen alternativen Ausführungsform der Abgangsleiter-Gehäuseabschnitt 70 an seinem unteren Ende so verkürzt, dass er lediglich mit dem obersten Sammelschienen-Gehäuseabschnitt 10 direkt fluidisch verbunden ist. Die übrigen Abgangsleiter-Gehäuseabschnitte 50, 60 sind wie in Fig. 1 bis 4b dargestellt, d.h. der Abgangsleiter-Gehäuseabschnitt 50 ist mit allen drei Sammelschienen-Gehäuseabschnitten 10, 20, 30 direkt fluid verbunden, und der Abgangsleiter-Gehäuseabschnitt 60 ist lediglich mit zweien der drei Sammelschienen-Gehäuseabschnitte, nämlich mit den Sammelschienen-Gehäuseabschnitten 10 und 20 direkt fluid verbunden.

Gemäß einer weiteren Alternative ist der Abgangsleiter-Gehäuseabschnitt 50 lediglich mit dem Sammelschienen-Gehäuseabschnitt 10, der Abgangsleiter-Gehäuseabschnitt 60 mit den drei Sammelschienen-Gehäuseabschnitten 10, 20, 30, und der Abgangsleiter-Gehäuseabschnitt 70 lediglich mit den Sammelschienen-Gehäuseabschnitten 10 und 20 direkt fluid verbunden.

Die Abgangsleiter-Gehäuseabschnitte 50, 60, 70 sind voneinander beabstandet. Der Abstand zwischen ihren Zylinderachsen ist größer als der Durchmesser bzw. der doppelte Krümmungsradius ihrer zylinderartigen Wandabschnitte. Genauer sind die Zylinderachsen der Abgangsleiter-Gehäuseabschnitte 50, 60, 70 in einem gleichmäßigem Abstand voneinander entfernt in Richtung der zweiten Gerade 6 angeordnet. Der Abstand ist gleich dem Abstand, in dem die Zylinderachsen der Sammelschienen-Gehäuseabschnitte 10, 20, 30 voneinander beabstandet sind. Aus diesem Grund wird der Abstand auch als Einheits-Abstand bezeichnet.

Im Folgenden werden die die Anordnung und einige Eigenschaften des Betätigungswellen-Gehäuseabschnitts 40 beschrieben: Der Betätigungswellen-Gehäuseabschnitt 40 ist zur Aufnahme einer Betätigungswelle für eine Betätigung von in dem Gasraum anordenbaren Schaltelementen geeignet bzw. vorgesehen. Der Betätigungswellen-Gehäuseabschnitt 40 ist zylinderartig, mit einer sich parallel zu den Sammelschienen-Gehäuseabschnitten 10, 20, 30 (d.h. in y-Richtung) erstreckenden Zylinderachse 144 geformt. Die Zylinderachse ist in der zweiten Ebene E2 angeordnet. Der Betätigungswellen-Gehäuseabschnitt 40 erstreckt sich entlang der drei Abgangsleiter-Gehäuseabschnitte 50, 60, 70 und quer zu diesen. Der Betätigungswellen-Gehäuseabschnitt 40 stellt ein Innenvolumen zur Aufnahme einer sich entlang der Zylinderachse 144 erstreckenden Betätigungswelle zur Verfügung. Das Innenvolumen des Betätigungswellen-Gehäuseabschnitts 40 steht direkt mit dem jeweiligen Inneren der Abgangsleiter-Gehäuseabschnitte 50, 60, 70 in Verbindung. Der Betätigungswellen-Gehäuseabschnitt ist in x-Richtung versetzt gegenüber den Zylinderachsen der Sammelschienen-Gehäuseabschnitte 11, 21, 31 angeordnet. Der Versatz beträgt die Hälfte des Abstands der Zylinderachsen der Sammelschienen-Gehäuseabschnitte 11, 21, 31 voneinander (jeweils Abstand von Mitte zu Mitte), d.h. des Einheits-Abstands.

Im Folgenden wird das verwendete System der Bezugskoordinaten und die allgemeine Anordnung einiger Elemente des Gehäuses 1 beschrieben. x, y und z bezeichnen wie bereits erwähnt die Richtungen eines orthogonalen Bezugssystems (Koordinatensystems). Dabei wird die z-Richtung durch die Richtung der ersten Gerade 4 definiert. Die zur z-Richtung senkrechte y-Richtung wird sodann durch die zweite Gerade 6 definiert. Damit ist auch x-Richtung als die zur z- und y-Richtung senkrechte Richtung definiert.

Die zweite Gerade 6, entlang derer die Abgangsleiter-Öffnungen 56, 66, 76 angeordnet sind, ist gegenüber der ersten Gerade 4 in der x-Richtung versetzt, so dass sich die erste Gerade 4 und die zweite Gerade 6 nicht schneiden. Die dritte Gerade 4' verläuft parallel zur z-Richtung. Die erste Öffnungs-Ebene E1 erstreckt sich parallel zur x- und z-Richtung (x-z-Ebene). Die zweite Öffnungs-Ebene E2 erstreckt sich parallel zur y- und z-Richtung (y-z-Ebene). Die zweite Öffnungs-Ebene E2 ist somit senkrecht zur ersten Öffnungs-Ebene E1 angeordnet. Die zweite Gerade 6 verläuft senkrecht zu der ersten Öffnungs-Ebene E1. Die erste Gerade 4 verläuft parallel zu der zweiten Öffnungs-Ebene E2. Die Ebenen E1 bis E4 sind in Fig. 4b durch gestrichelte Linien dargestellt. Dabei verlaufen die Ebenen E1 bis E3 senkrecht zur Bildebene von Fig. 4b (in z-Richtung) und sind daher nur als die gestrichelte Linie sichtbar. Die Ebene E4 verläuft in der Bildebene von Fig. 4b. Zusätzlich ist auch die Betätigungs-Achse 144 in Fig. 4b als gestrichelte Linie dargestellt.

Für die Verwendbarkeit des Gehäuses 1 als Modul im Rahmen eines modularen Schaltanlagen-Konzepts ist das Gehäuse 1 in Bezug auf einen Einheits-Abstand des Moduls dimensioniert. Dieser Einheits-Abstand wird durch den gleichmäßigen Abstand definiert, in dem die jeweiligen Mitten der drei ersten Sammelschienen-Öffnungen 14, 24, 34 zueinander entlang der ersten Gerade 4 aufgereiht sind. Die jeweiligen Mitten der drei Abgangsleiter-Öffnungen 56, 66, 76 sind ebenfalls in dem Einheits-Abstand zueinander entlang der zweiten Gerade 6 aufgereiht. Die jeweiligen Mitten der drei zweiten Sammelschienen-Öffnungen 16, 26, 36 sind ebenfalls in dem Einheits-Abstand zueinander entlang einer dritten Gerade 4' aufgereiht.

Im Folgenden werden weitere allgemeine Eigenschaften des Gehäuses beschrieben. Das Innenvolumen des Gehäuses bildet einen zusammenhängenden Gasraum. Die Sammelschienen-Öffnungen 14, 24, 34 und 16, 26, 36 und die Abgangsleiter-Öffnungen 56, 66, 76 bilden jeweils einen separaten Zugang zum Gasraum von außerhalb des Gehäuses. Der Gasraum steht also mit den drei ersten und zweiten Sammelschienen-Öffnungen und mit den drei Abgangsleiter-Öffnungen in Verbindung. Der gemeinsame Gasraum dient unter anderem zur Aufnahme eines Isoliergases und von drei gasisolierten Sammelschienen-Leiterabschnitten. Die Sammelschienen-Öffnungen 14, 24, 34 und 16, 26, 36 und die Abgangsleiter-Öffnungen 56, 66, 76 sind derart gestaltet, dass sie einphasige Isolatoren (also Isolatoren zur Aufnahme lediglich eines einzigen Phasenleiters) aufzunehmen vermögen. Somit bildet das Gehäuse 1 einen zusammenhängenden Gasraum 3 zur dreiphasigen Kapselung der Sammelschienen-Nominalleiter, und hat Sammelschienen-Öffnungen 14, 24, 34 und 16, 26, 36 für einphasig von dem Gehäuseinneren wegführende Sammelschienen-Anschlüsse (einphasig aus dem Gehäuseinneren herausführende Anschlussstutzen). Entsprechendes gilt für die Abgangs-Öffnungen 56, 66, 76.

Das Gehäuse ist im Wesentlichen einstückig ausgebildet, d.h. abgesehen von für die Gehäuseform unwesentlichen Teilen (Sichtfenster, Zugänge, Schott-Isolatoren etc.) aus einem Stück gefertigt. Somit ist das Gehäuse als Ganzes montierbar. Das Gehäuse 1 ist ein Gußteil, d.h. ein formgegossenes Teil (und somit von formgießbarer Gestalt). Das Gehäuse 1 ist aus Aluminium oder einem anderen Metall und/oder deren Legierungen formgegossen. Wie dem auch sei, geschweisste Varianten des Gehäuses 1 sind denkbar. Das Gehäuse 1 ist so gestaltet, dass es einem Innendruck von mindestens 2 bar standhält. Ferner ist das Gehäuse 1 so gestaltet, dass es seine eigene Masse zu tragen vermag, wenn wenn es an mindestens zweien der Flansche, insbesondere an dreien der Flansche, getragen wird, insbesondere wenn es an den Flanschen der Abgangsleiter-Öffnungen 56, 66, 76 getragen wird. Diese Bedingung stellt bestimmte Anforderungen an die Verwindungssteifigkeit des Wandmaterials und die Dicke der Flanschverbindungen, bietet aber Vorteile hinsichtlich der Montierbarkeit und der Befestigung in einem Schaltfeld.

Das Gehäuse 1 ist so gestaltet, dass es einen gemeinsamen Gasraum (Gasvolumen) für entlang einer Gerade angeordnete Leiterabschnitte (entlang der Geraden 4 und 4' angeordnete Sammelschienen-Leiterabschnitte und entlang der Gerade 6 angeordnete Abgangsleiterabschnitte) zur Verfügung stellt. Die Anordnung entlang einer Linie erlaubt eine auch für hohe Spannungen gute gegenseitige Abschirmung und Isolierung, und auch die Verwendbarkeit von bewährten Konzepten und Layouts einphasig gekapselter Schaltanlagensysteme. Weiter hat das gemeinsame Gasvolumen den Vorteil, dass die Befüllung mit Gas und die Überprüfung des Gasdrucks vereinfacht ist.

Darüber hinaus ist das Gehäuse 1 so gestaltet, dass die Außenfläche des Gehäuses 1 zumindest partiell eingezogen ausgebildet ist, also konkave Einbuchtungen hat. Diese Einbuchtungen sind beispielsweise in dem Übergangsbereich zwischen den ersten Sammelschienen-Öffnungen 14, 24, 34 und den Abgangsleiter-Öffnungen 56, 66, 76, zwischen den zweiten Sammelschienen-Öffnungen 16, 26, 36 und den Abgangsleiter-Öffnungen 56, 66, 76, und / oder zwischen den ersten Sammelschienen-Öffnungen 14, 24, 34 und den zweiten Sammelschienen-Öffnungen 16, 26, 36 vorhanden. Die Außenfläche ist hierbei als die globale Außenfläche ohne Rücksicht auf hierfür irrelevante lokale Elemente wie Schrauben, Griffe, usw. zu verstehen.

Durch die konkaven Einbuchtungen wird eine Reduzierung des Gasvolumens und/oder eine Vergrößerung der Oberfläche des Gehäuses 1 erreicht. Allgemein und unabhängig von der dargestellten Ausführungsform ist das Gasvolumen gegenüber einem gedachten, einhüllenden Quader 9 um mindestens 20% mindestens 30% oder sogar um mindestens 50% reduziert. Der gedachte Quader ist hierbei als der kleinste Quader definiert, der das Gasvolumen des Gehäuses 1 vollständig umfasst. In Fig. 2b ist der entsprechende gedachte Quader durch das gepunktete Quadrat 9 dargestellt.

Das Gehäuse weist ferner einige Durchbrüche auf, welche das Gehäuse durchstoßen. Besonders gut ist in Fig. 1b das Durchbruch 8 sichtbar, welches sich in dem Bereich zwischen den Sammelschienen-Gehäuseabschnitten 20 und 30 und zwischen den beiden äußeren Abgangsleiter-Gehäuseabschnitten 50 und 70 erstreckt. Der Durchbruch 8 durchstößt die Außenhülle und somit auch das Innenvolumen des Gehäuses 1. Hierbei ist der Durchbruch 8 nicht als Öffnung in der Gehäusewand zu verstehen, die einen Zugang zum Gasraum erlauben würde. Der Durchbruch stellt keine Verbindung zwischen dem Gasraum und dem Außenraum des Gehäuses her. Vielmehr ist unter einem Durchbruch ein topologisches Loch zu verstehen, das dazu führt, dass der Gasraum zwar ein zusammenhängendes Volumen, aber kein einfach zusammenhängendes Volumen bildet. Das Volumen kann auch als Volumen mit einem in der YZ-Ebene verlaufenden, ringartigen Querschnitt beschrieben werden (wobei "ringartig" nicht ausschließen soll, dass neben dem das Innere des Rings bildenden Durchbruch noch weitere Durchbrüche vorhanden sein können).

Weitere derartige Durchbrüche erstrecken sich in dem Bereich zwischen den Sammelschienen-Gehäuseabschnitten 10 und 20 und zum einen zwischen den Abgangsleiter-Gehäuseabschnitten 50 und 60, und zum anderen zwischen den Abgangsleiter-Gehäuseabschnitten 60 und 70.

Die eingezogene Gehäuseform und auch die Durchbrüche haben den Vorteil, dass der Gasraum 3 möglichst klein gehalten werden kann, so dass möglichst wenig Isoliergasvolumen bereitgestellt werden muss. Da viele Isoliergase wie SF6 ungünstige Umwelt-Eigenschaften haben und zudem kostspielig sind, hat dies den Vorteil, dass die benötigte Menge an Isoliergas reduziert ist. Die Durchbrüche haben zudem den Vorteil, dass dank ihnen das Verhältnis der Gehäuseoberfläche zu dessen Innenvolumen erhöht ist. Dadurch ist auch die Wärmeabfuhr aus dem Gehäuse erhöht. Zusätzlich stellen die Durchbrüche einen Transportgriff für das Gehäuse zur Verfügung und erlauben dadurch eine vereinfachte Handhabbarkeit des Gehäuses.

Ein weiterer vorteilhafter Aspekt des in Fig. 1 bis 4b dargestellten Gehäuses 1 sind seine Symmetrie-Eigenschaften. Die im Folgenden beschriebenen Symmetrien des Gehäuses bieten Vorteile im Hinblick auf seine vielfältige Verwendbarkeit im Rahmen eines modularen Systems. Zunächst haben bereits die Öffnungen, d.h. die ersten Sammelschienen-Öffnungen 14, 24, 34, die zweiten Sammelschienen-Öffnungen 16, 26, 36 und die Abgangs-Öffnungen 56, 66, 76 symmetrische Eigenschaften: Die Menge dieser Öffnungen sind spiegelsymmetrisch zu einer Spiegel-Ebene E5 angeordnet, welche in dieser Ausführungsform der in Fig. 2a mit IIIb gekennzeichneten Ebene entspricht. Diese Spiegel-Ebene IIIb ist parallel zu der ersten Öffnungs-Ebene E1 angeordnet. Die Spiegel-Ebene IIIb verläuft weiter durch die mittlere Abgangsleiter-Öffnung 66. Nicht nur die Öffnungen, sondern das ganze Gehäuse ist im Wesentlichen spiegelsymmetrisch zu der Spiegel-Ebene IIIb aufgebaut. Im Wesentlichen spiegelsymmetrisch bedeutet hier neben der oben beschriebenen Symmetrie bezüglich der Sammelschienen- und Abgangs-Öffnungen auch eine Symmetrie bezüglich der Hauptgeometrie des Gehäuses (nicht aber bezüglich etwaiger Hilfsanschlüsse und sonstiger unwesentlicher Details). Quantitativ ausgedrückt bedeutet "im Wesentlichen spiegelsymmetrisch", dass das bei Spiegelung nicht überlappende Volumen des Gasraums 3 nicht mehr als 5% des gesamten Volumens des Gasraums 3 betragen darf.

In Fig. 2a ist darüber hinaus gut zu sehen, wie die Abgangsleiter-Gehäuseabschnitte 50, 70 jeweils die Innenvolumina der Sammelschienen-Gehäuseabschnitte 10, 20, 30 miteinander verbinden. Der Abgangsleiter-Gehäuseabschnitt 60 verbindet dagegen nur die Innenvolumina der Sammelschienen-Gehäuseabschnitte 10 und 20 miteinander, stellt aber keine Verbindung zum Innenvolumen des Sammelschienen-Gehäuseabschnitts 30 her. Von dem Sammelschienen-Gehäuseabschnitt 30 ist der Abgangsleiter-Gehäuseabschnitt 60 durch den Durchbruch 8 getrennt. Dies ist ebenfalls in Fig. 3a bis 3c zu sehen, die seitliche Querschnitte des Schaltanlagenmodul-Gehäuses 1 darstellen, jeweils entlang der sich in x-z-Richtung erstreckenden Querschnittsebenen IIIa, IIIb bzw. IIIc (siehe Fig. 2a): In den Figuren 3a und 3c ist ebenfalls zu sehen, wie die Abgangsleiter-Gehäuseabschnitte 50, 70 jeweils die Innenvolumina der Sammelschienen-Gehäuseabschnitte 10, 20, 30 miteinander verbinden. In Fig. 3b ist zu sehen, wie der Abgangsleiter-Gehäuseabschnitt 60 nur die Innenvolumina der Sammelschienen-Gehäuseabschnitte 10 und 20 miteinander verbindet, aber von dem Sammelschienen-Gehäuseabschnitt 30 durch den Durchbruch 8 getrennt ist.Das in Fig. 1a bis 4b dargestellte Gehäuse kann auf verschiedene Weisen verallgemeinert werden. So ist es etwa auch möglich, dass die zweiten Sammelschienen-Öffnungen nicht spiegelbildlich zu den ersten Sammelschienen-Öffnungen ausgebildet sind, sondern auf andere Weise gegenüber den ersten Sammelschienen-Öffnungen angeordnet sind. Allgemein können die zweiten Sammelschienen-Öffnungen auch z.B. schräg den ersten Sammelschienen-Öffnungen gegenüberliegen. Auch kann die zweite Gerade 6 auch auf andere Weise als in einem rechten Winkel zur ersten Gerade 4 geneigt sein, z.B. kann sie einen Winkel von 45° aufweisen.;

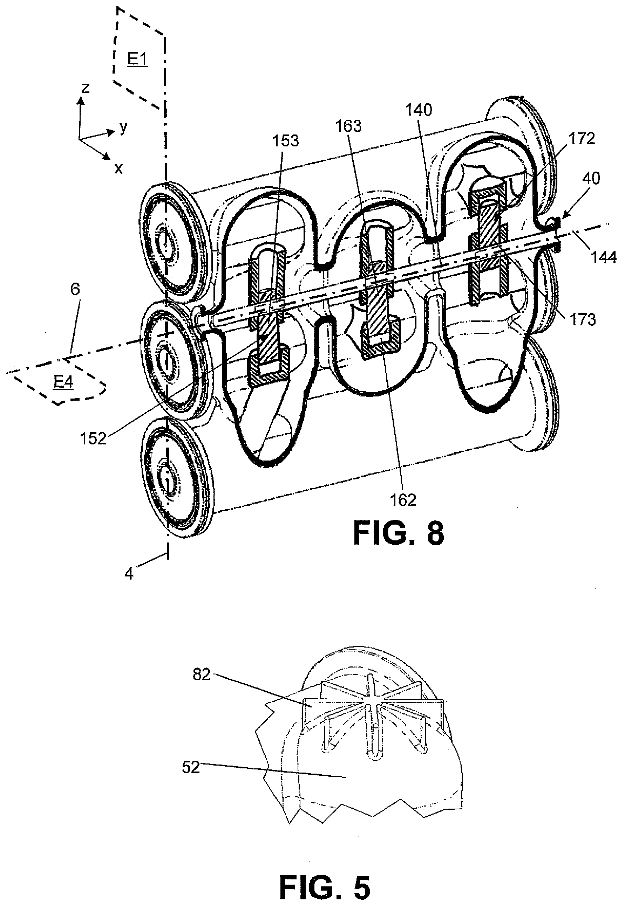

Fig. 5 zeigt ein Teil des Schaltanlagenmodul-Gehäuses gemäß einer weiteren Ausführungsform der Erfindung. Hierbei ist gegenüber Fig. 1a bis 4b das obere Ende 52 des Leiterabgangs-Gehäuseabschnitts 50 (siehe Fig. 1a) variiert. An dem Ende 52 ist in Fig. 5 eine Kühlvorrichtung zum Erhöhen (im Vergleich zu einer normalen, glatten Oberfläche) der Wärmeabfuhr aus dem Innenvolumen des Gehäuses über die Gehäuseoberfläche angebracht. In Fig. 5 umfasst die Kühlvorrichtung sternförmig verlaufende Kühlrippen 82. Die oberen Endstücke der übrigen Leiterabgangs-Gehäuseabschnitte sind in analoger Weise variiert und mit einer entsprechenden Kühlvorrichtung versehen. In alternativen Ausführungsformen (nicht dargestellt) umfasst die Kühlvorrichtung stattdessen parallel zueinander verlaufende Kühlrippen oder konzentrisch kreisförmig verlaufende Kühlrippen 86. Als weitere Variation kann auch statt den in Fig. 5 dargestellten passiven Kühlvorrichtungen eine aktive Kühlvorrichtung (mit Energiezufuhr für die Kühlung, z.B. ein Ventilator) eingesetzt werden. Auch ein Thermosiphon kann eingesetzt werden. Eine Kühlvorrichtung ist hier so verstanden, dass sie eine aktive oder passive Struktur mit planmäßig verbesserter Kühlung gegenüber einer glatten Oberfläche bedeutet.

Eine solche Kühlvorrichtung hat den Vorteil, dass Wärme noch effizienter aus dem Gehäuseinneren abgeführt wird. Die Anordnung an einem Abschluss-Stück des Abgangsleiter-Gehäuseabschnitts, hier also an den Oberen Endstücke 52, 62, 72 der Leiterabgangs-Gehäuseabschnitte 50, 60, 70 (siehe Fig. 1a) hat den Vorteil, dass aufgrund der Lage ganz oben im Gehäuse die Wärme dort die besondere Tendenz hat sich anzusammeln, und daher von dort besonders gut abgeführt werden kann.

Das Schaltanlagenmodul-Gehäuse 1 weist weiter verschiedene gasdicht verschließbare Öffnungen, Zugänge und Sichtfenster auf (nicht dargestellt). Die Sichtfenster und Zugänge sind gasdicht verschlossen, können aber teilweise geöffnet werden, um eine Kontrolle und Wartung des Gehäuseinneren zu erlauben. Die Zugänge können auch mit einer Gasleitung zur Befüllung des Gehäuseinneren mit Gas und zur Kontrolle des Gasdrucks verbunden werden. Die Sichtfenster können mit Berstscheiben ausgestattet sein.

In Fig. 6 bis 8 ist ein Schaltanlagenmodul 2 gemäß einer Ausführungsform der Erfindung dargestellt, das das oben beschriebene Gehäuse 1 umfasst. Fig. 6 und 8 zeigen jeweils eine perspektivische Querschnittsansicht des Schaltanlagenmoduls 2. Fig. 7a bis 7c zeigen seitliche Querschnitte des Schaltanlagenmoduls 2 entsprechend den Querschnittsansichten von Fig. 3a bis 3c, d.h. jeweils entlang der sich in x-z-Richtung erstreckenden Querschnittsebene IIIa, IIIb bzw. IIIc (siehe Fig. 2a). Diese Figuren werden im Folgenden gemeinsam beschrieben.

Das Schaltanlagenmodul 2 hat ein Gehäuse 1 wie in Fig. 1a bis 4b dargestellt. Die entsprechenden Teile des Gehäuses 1 wurden bereits weiter oben beschrieben. Weiter hat das Schaltanlagenmodul 2 eine Sammelschienen-Leiteranordnung mit drei Sammelschienen-Leiterabschnitten 110, 120 und 130, und eine Abgangsleiter-Anschlussgruppe mit drei Abgangs-Sammelschienenverbindern 150, 160, 170. Die Abgangs-Sammelschienenverbinder 150, 160, 170 haben jeweils einen Abgangs-Leiterabschnitt 156, 166, 176, der sich von dem Inneren des Gehäuses 1 zu einer jeweiligen der Abgangs-Anschlussöffnungen 50, 60, 70 erstreckt. Weiter ist innerhalb des Betätigungswellen-Gehäuseabschnitts 40 eine Betätigungswelle 140 angeordnet. Die Betätigungswelle 140 erstreckt sich innerhalb des Betätigungswellen-Gehäuseabschnitts 40 entlang der Betätigungswellen-Achse 144 (in y-Richtung), die zugleich die Zylinderachse des Betätigungswellen-Gehäuseabschnitts 40 bildet. Die Sammelschienen-Leiterabschnitte können auch als Sammelschienen-Nominalleiter oder Sammelschienen-Phasenleiter bezeichnet werden, und die Abgangs-Leiterabschnitte können auch als Abgangs-Nominalleiter oder Abgangs-Phasenleiter bezeichnet werden.

Jeder der Sammelschienen-Leiterabschnitte 110, 120 und 130 erstreckt sich innerhalb eines jeweiligen der Sammelschienen-Gehäuseabschnitte 10, 20, 30 zwischen einer jeweiligen der ersten Sammelschienen-Anschlussöffnungen 14, 24, 34 und einer jeweiligen der zweiten Sammelschienen-Anschlussöffnungen 16, 26, 36 (siehe Fig. 1b). Die Sammelschienen-Leiterabschnitte 110, 120 und 130 erstrecken sich geradlinig zwischen diesen Enden entlang der jeweiligen Zylinder-Achsen der jeweiligen zylinderartigen Gehäuseabschnitte 11, 21, 31. An den ersten Sammelschienen-Anschlussöffnungen 14, 24, 34 sind Schott-Isolatoren 114, 124, 134 angebracht, in deren Mitte sich jeweilige erste Enden 114, 124, 134 der Sammelschienen-Leiterabschnitte 110, 120, 130 angeordnet sind (bzw. aus deren Mitte sich die Enden 114, 124, 134 erstrecken). Die Schott-Isolatoren 115, 125, 135 halten die jeweiligen Enden 114, 124, 134 der Sammelschienen-Leiterabschnitte 110, 120 und 130 und werden von ihnen durchdrungen, um eine Verbindung mit außerhalb des Gehäuses 1 liegenden Abschnitten der Sammelschiene herzustellen. An den zweiten, gegenüberliegenden Sammelschienen-Anschlussöffnungen 16, 26 und 36 (siehe Fig. 1b) sind ebenfalls entsprechende Schott-Isolatoren angebracht, in deren Mitte jeweilige zweite Enden der Sammelschienen-Leiterabschnitte 110, 120, 130 angeordnet sind, um eine Verbindung mit außerhalb des Gehäuses 1 liegenden Abschnitten der Sammelschiene herzustellen. Jeder der drei Sammelschienen-Leiterabschnitte 110, 120, 130 erstreckt sich somit mittig innerhalb einem jeweiligen der Sammelschienen-Gehäuseabschnitte 10, 20, 30 längs dessen jeweiliger Zylinderachse (y-Richtung).

Die Sammelschienen-Leiterabschnitte 110, 120, 130 erstrecken sich zumindest im Bereich der ersten und der zweiten Sammelschienen-Öffnungen in der oben beschriebenen Sammelschienen-Normalebene, d.h. der (y-z-)Ebene, die die erste Gerade 4 enthält und die senkrecht auf der ersten Öffnungs-Ebene E1 steht.

Jeder der Abgangs-Sammelschienenverbinder 150, 160, 170 erstreckt sich innerhalb eines jeweiligen der Abgangs-Gehäuseabschnitte 50, 60, 70 von einem jeweiligen der Sammelschienen-Leiterabschnitte 110, 120, 130 zu einer jeweiligen der Abgangs-Anschlussöffnungen 56, 66, 76, um den jeweiligen der Sammelschienen-Leiterabschnitte 110, 120, 130 mit dem Inneren der jeweiligen der Anschlussöffnungen 56, 66, 76 zu verbinden. An den Abgangsleiter-Öffnungen 56, 66 und 76 sind Schott-Isolatoren 157, 167, 177 angebracht (siehe Fig. 7a bis 7c), in deren Mitte die jeweiligen Abgangs-Leiterabschnitte 156, 166, 176 angeordnet sind. Die Schott-Isolatoren 157, 167, 177 halten die jeweiligen Abgangs-Leiterabschnitte 156, 166, 176 und werden von ihnen durchdrungen, um eine Verbindung mit außerhalb des Gehäuses 1 liegenden Teilen der Schaltanlage bzw. des Feldes zu erlauben. Die Abgangs- Leiterabschnitte 156, 166, 176 erstrecken sich zumindest im Bereich der Abgangs-Öffnungen 56, 66, 76 in der Abgangs-Normalebene E4, d.h. der (x-y-)Ebene, die die zweite Gerade 6 enthält und die senkrecht auf der zweiten Öffnungs-Ebene E2 steht.

Die Sammelschienen-Leiterabschnitte 110, 120, 130 und die Abgangs-Leiterabschnitte 156, 166, 176 verlassen das Gehäuse somit in einphasigen, d.h. pro Phase separaten Öffnungen 14, 24, 34, 16, 26, 36 und 56, 66, 76. Diese Leiterabschnitte durchdringen im Bereich dieser Gehäuse-Öffnungen jeweils einen einphasigen Isolator 115, 125, 135, 117, 127, 137 und 157, 167, 177. Durch die Anordnung und Orientierung der Gehäuse-Öffnungen 14, 24, 34, 16, 26, 36 und 56, 66, 76 wird jeweils auch die Anordnung und Orientierung der Anschlüsse der Sammelschienen-Leiterabschnitte 110, 120, 130 und der Abgangs-Leiterabschnitte 156, 166, 176 vorgegeben, die die jeweilige Öffnung mittig und in Normal-Richtung (d.h. entlang der jeweiligen Mittelsenkrechte der Öffnung) verlassen. Dadurch gelten die hierin beschriebenen Vorteile bezüglich der Anordnung und Orientierung der Öffnungen in entsprechender Weise auch für die Anschlüsse an die in den Öffnungen angeordneten jeweiligen Leiterabschnitte. Die Anschlüsse können als Gewindekontakt über Gewinde und Gewindelöcher oder als Steckkontakt ausgeführt sein.

Durch die drei Abgangsleiter-Öffnungen 56, 66, 76 ist eine Abgangs-Normalebene E4 definiert. Genauer ist die Abgangs-Normalebene E4 dadurch definiert, dass sie parallel zu den Mittelsenkrechten der Abgangsleiter-Öffnungen 56, 66, 76 ist. Diese Definition ist durch die in Fig. 1a dargestellte Abgangs-Normalebene E4 sowie durch jede zu der Abgangs-Normalebene E4 parallele Ebene erfüllt. Die in Fig. 1 dargestellte Abgangs-Normalebene E4 wird eindeutig definiert durch die zusätzliche Bedingung, dass die Mittelsenkrechten der Abgangsleiter-Öffnungen 56, 66, 76 in der Abgangs-Normalebene E4 enthalten sind. Diese durch die zusätzliche Bedingung eindeutig festgelegte Abgangs-Normalebene E4 wird auch als Abgangs-Normal-Mittelebene bezeichnet. Wenn im Folgenden bestimmte Eigenschaften und Anordnungen bezüglich der Abgangs-Normalebene E4 beschrieben werden, gelten diese ganz besonders auch für die Abgangs-Normal-Mittelebene. Die Mittelsenkrechten sind die Normalen zu den Öffnungen - d.h. zu Öffnungsebenen, entlang denen die jeweiligen Abgangsleiter-Öffnungen 50, 60, 70 flächenmäßig angeordnet sind (jede dieser Öffnungsebenen liegt hier in der weiter oben beschriebenen und in Fig. 1a gezeigten zweiten Öffnungs-Ebene E2) - und verlaufen durch den Mittelpunkt der durch die Öffnungen in diesen Öffnungsebenen definierten Flächen. Als Mittelpunkt kann der Schwerpunkt der in der jeweiligen Öffnungsebenen definierten Fläche angesehen werden. Die Mittelsenkrechten verlaufen also in der in Fig. 1a angedeuteten Abgangs-Normalebene E4 entlang der x-Richtung.

Jeder der Abgangsleiterabschnitte 156, 166, 176 erstreckt sich zumindest im Bereich der jeweiligen der Abgangsleiter-Öffnungen 50, 60, 70 entlang der jeweiligen Mittelsenkrechte dieser Abgangsleiter-Öffnung, und somit entlang der Abgangs-Normalebene E4. Die Achsen der sich längs erstreckenden Abgangs-Leiterabschnitte 156, 166, 176 erstrecken sich in einer gemeinsamen Ebene, die gleich der durch die drei Abgangsleiter-Öffnungen 56, 66, 76 definierten Abgangs-Normalebene E4 ist.

Jeder der Abgangs-Sammelschienenverbinder 150, 160, 170 weist einen jeweiligen Trennschalter 151, 161, 171 mit einer jeweiligen Schalter-Trennstelle 152, 162, 172 auf. Der erste Trennschalter 151 verbindet über die erste Trennstelle 152 wahlweise den ersten Sammelschienen-Leiterabschnitt 110 mit dem ersten Abgangsleiterabschnitt 156. Entsprechend verbindet auch der zweite bzw. dritte Trennschalter 161, 171 über die zweite bzw. dritte Trennstelle 162, 172 wahlweise den zweiten bzw. dritten Sammelschienen-Leiterabschnitt 120, 130 mit dem zweiten bzw. dritten Abgangsleiterabschnitt 166, 176.

In dem Betätigungswellen-Gehäuseabschnitt 40 verläuft eine Betätigungswelle 140, welche um eine sich in y-Richtung erstreckende Betätigungsachse 144 rotierbar ist. Die Betätigungsachse 144 liegt in der Abgangs-Normalebene E4. Die Betätigungswelle 140 erstreckt sich über jeden der drei Trennschalter 151, 161, 171 hinweg.

Die Schalterkontakte dieser Schalter werden durch jeweilige Schaltkolben (allgemeiner Schaltelemente) 153, 163, 173 gebildet. Die Schaltkolben 153, 163, 173 sind zum Schalten geradlinig längs einer Schalt-Richtung (z-Richtung) beweglich und sind mit der Betätigungswelle 140 durch ein Getriebe, z.B. ein Ritzel / Zahnstangengetriebe, operativ verbunden, so dass die Schaltkolben 153, 163, 173 durch Drehung der Betätigungswelle 140 längs in z-Richtung zwischen einer geöffneten Position (wie in Fig. 6 bis 7c gezeigt) und einer geschlossenen Position (wie in Fig. 8 gezeigt) bewegt werden können. Jeder der drei Trennschalter 151, 161, 171 ist somit öffenbar und stellt wahlweise einen elektrischen Kontakt zwischen einem jeweiligen der Sammelschienen-Leiterabschnitt 110, 120, 130 und einem jeweiligen der Abgangs- Leiterabschnitte 156, 166, 176 her. Die Trennschalter 151, 161, 171 sind mit der Betätigungswelle 140 gemeinsam verbunden, so dass sie durch die Betätigungswelle 140 gemeinsam betätigt werden. Alternativ können die Trennschalter 151, 161, 171 auch jeweils mit einer individuellen Betätigungsvorrichtung angetrieben werden.

Im Folgenden soll die Anordnung und Orientierung verschiedener Teile des Schaltanlagenmoduls 2 im Verhältnis zu der durch die drei Abgangsleiter-Öffnungen 56, 66, 76 definierten Abgangs-Normalebene E4 und insbesondere zur Abgangs-Normalebene E4 genauer beschrieben werden. Die Trennstellen 152, 162 der Trennschalter 150, 160 sind auf einer ersten Seite der Abgangs-Normalebene E4, nämlich auf der Seite unterhalb der Abgangs-Normalebene E4 angeordnet. Die Trennstelle 172 des Trennschalters 170 ist dagegen auf einer zweiten, der ersten Seite gegenüberliegenden, nämlich der oberen Seite der Abgangs-Normalebene E4 angeordnet. Die Trennstelle eines Trennschalters ist als Punkt definiert, nämlich als Mittelpunkt der Trennstrecke zwischen zwei sich am nächsten liegenden Leiterenden beidseitig eines geöffneten Schalters (hierbei werden Details wie- in der vorliegenden Ausführungsform ohnehin nicht vorhandene -Trennmesser nicht berücksichtigt). Diese Anordnung hat den Vorteil, dass einerseits die Trennstellen verhältnismäßig nahe zur Abgangs-Normalebene E4 und somit zu den nahe dieser Ebene angeordneten weiteren Teilen angeordnet sein können, und dennoch der Abstand zwischen den Trennstellen untereinander erhöht ist. Durch den erhöhten Abstand sind die Trennstellen relativ gut gegeneinander abgeschirmt, ohne dass auf eine kompakte Bauweise verzichtet werden muss. Insgesamt erlaubt diese Anordnung somit eine gute elektrische Abschirmung bei gleichzeitiger kompakter Bauweise.

Im Folgenden soll auch die Anordnung weiterer Teile gegenüber der Abgangs-Normalebene E4 und insbesondere zur Abgangs-Normalebene E4 beschrieben werden. Die Betätigungsachse 144 verläuft in der Abgangs-Normalebene E4. Die Sammelschienen-Leiterabschnitte 110, 120, 130 erstrecken sich parallel zu der Abgangs-Normalebene E4 und sind räumlich außerhalb der Abgangs-Normalebene E4 angeordnet. Genauer gesagt sind die Sammelschienen-Leiterabschnitte 110, 120, 130 räumlich so angeordnet, dass die Sammelschienen-Leiterabschnitte 120, 130 auf der ersten (unteren) Seite der Abgangs-Normalebene E4 und der Sammelschienen-Leiterabschnitt 110 auf der zweiten (oberen) Seite der Abgangs-Normalebene E4 angeordnet ist. Anders ausgedrückt sind die Sammelschienen-Leiterabschnitte 110, 120, 130 gegenüber der Normalebene E4 seitlich versetzt und parallel zur Normalebene E4 verlaufend angeordnet. Jede der Trennstellen 152, 162, 172 ist somit auf der gleichen, also ersten oder zweiten, Seite der Abgangs-Normalebene E4 wie der zugehörige Sammelschienen-Leiterabschnitt 110, 120, 130 angeordnet.

Auch weitere Ebenen lassen sich definieren. Alle diese Ebenen sind in der in den Figuren dargestellten Ausführungsformen gleich der Abgangs-Normalebene E4, dies ist jedoch in Variationen dieser Ausführungsformen nicht zwangsläufig der Fall. Eine weitere, mit der Abgangs-Normalebene E4 gleiche Trennschalter-Ebene kann man beispielsweise wie folgt definieren: Man betrachtet die Verbindungsgerade, welche senkrecht zur Betätigungsachse 144 zwischen der Trennstelle 152 und der Betätigungsachse 144 verläuft. Dann wird die Trennschalter-Ebene dadurch definiert, dass sie senkrecht zu der Verbindungsgeraden ausgerichtet ist und die Betätigungsachse 144 enthält. Analog kann man noch weitere, ebenfalls mit der Abgangs-Normalebene E4 gleiche weitere Trennschalter-Ebenen über die Verbindungsgeraden definieren, welche senkrecht zur Betätigungsachse 144 zwischen der Trennstelle 162 bzw. 172 und der Betätigungsachse 144 verlaufen. Hierin wurde die Anordnung der verschiedenen Teile bezüglich der durch die drei Abgangsleiter-Öffnungen 56, 66, 76 definierten Abgangs-Normalebene E4 beschrieben. In entsprechender Weise kann jedoch statt der Abgangs-Normalebene E4 auch die Trennschalter-Ebenen und/oder die Abgangs-Normalebene, herangezogen werden. In der hier gezeigten Ausführungsform ergibt sich daraus kein Unterschied, denn alle diese Ebenen sind gleich einer Abgangs-Normalebene E4, nämlich der Abgangs-Normalebene E4.

Wenn das in Fig. 6 bis 8 dargestellte Schaltanlagenmodul 2 in einer Unterstation (auch als Schaltanlage bezeichnet) integriert ist, bildet es einen Teil eines Sammelschienen-Moduls (Busbar-Moduls). Die Sammelschienen-Leiterabschnitte 110, 120, 130 bilden in diesem Fall einen Teil einer Sammelschiene der Schaltanlage. Diese Sammelschiene kann in Bereichen außerhalb des Schaltanlagenmoduls 2 zumindest abschnittsweise einphasig gekapselt sein. Die Sammelschienen-Leiter erstrecken sich jeweils in y-Richtung, so dass die Sammelschiene auch außerhalb des Moduls 2 in der Sammelschienen-Ebene (y-z-Ebene) liegt.

Das in Fig. 1a bis 8 dargestellte Schaltanlagenmodul kann auf verschiedene Weisen variiert werden. So ist es etwa auch möglich, dass die zweiten Sammelschienen-Öffnungen nicht spiegelbildlich zu den ersten Sammelschienen-Öffnungen ausgebildet sind, sondern auf andere Weise gegenüber den ersten Sammelschienen-Öffnungen angeordnet sind. Allgemein können die zweiten Sammelschienen-Öffnungen auch z.B. schräg den ersten Sammelschienen-Öffnungen gegenüberliegen. Auch kann die zweite Gerade 6 auch auf andere Weise als in einem rechten Winkel zur ersten Gerade 4 geneigt sein, z.B. kann sie einen Winkel von 45° aufweisen. In einer weiteren Variation könnten statt der Schott-Isolatoren auch Stütz-Isolatoren, also allgemeiner Isolatoren, an den Sammelschienen-Öffnungen und / oder an den Abgangsleiter-Öffnungen verwendet werden. In einer weiteren Variation können gar keine Isolatoren verwendet werden und die entsprechenden Leiter anderweitig, z.B. mittels in dem Gehäuse liegenden Stützisolatoren, getragen werden. In einer weiteren Variation werden die Schaltstücke der Trennschalter nicht über eine gemeinsame Betätigungswelle, sondern jeweils über eine separate Betätigungswelle angetrieben. Diese separaten Betätigungswellen können sich auch z.B. in z-Richtung von einem Ende des jeweiligen Abgangs-Gehäuseabschnitts (entsprechend den Enden 52, 62, 72 in Fig. 1a) zum Schalter hin erstrecken. Optional kann für jede der separaten Betätigungswellen ein jeweils eigener Antrieb vorhanden sein. Anstatt von Trennschaltern mit Schaltkolben können auch Trennschalter mit etwa schwenkbaren Trennmessern verwendet werden.

Im Folgenden werden einige allgemeine Aspekte der Erfindung und mögliche Variationen der Ausführungsformen beschrieben. Gemäß einem Aspekt wird ein Gehäuse für ein Schaltanlagenmodul einer Schaltanlage, genauer eines Schaltfelds einer Unterstation, vorgeschlagen. Das Gehäuse bildet einen gemeinsamen Gasraum geeignet zur Aufnahme von einem Isoliergas und von drei gasisolierten Sammelschienen-Leiterabschnitten des Schaltanlagenmoduls und umfasst (zumindest) drei erste Sammelschienen-Öffnungen zur separaten Aufnahme von jeweils einem von drei Sammelschienen-Leitern der Schaltanlage, d.h. die Sammelschienen-Öffnungen könnte man auch als Sammelschienen-Leiter-Öffnungen bezeichnen. Separate Aufnahme bedeutet hierin, dass die Sammelschienen-Leiter jeweils einphasig in den jeweiligen Öffnungen angeordnet sind, insbesondere durch einen einphasigen Isolator durchführend angeordnet sind, wobei unter dem Begriff "einphasiger" Isolator ein elektrischer Isolator verstanden wird, durch welchen lediglich ein einziger Nominalleiter geführt ist. Die drei ersten Sammelschienen-Öffnungen sind flächenmäßig in einer ersten Öffnungs-Ebene und entlang einer ersten Gerade angeordnet, d.h. die Umrandungen der drei ersten Sammelschienen-Öffnungen definieren jeweilige Öffnungs-Flächen. Diese Öffnungs-Flächen liegen jeweils flächenmäßig in der ersten Öffnungs-Ebene. Jeweilige Mitten der Öffnungs-Flächen liegen auf der ersten Gerade. Das Gehäuse umfasst weiter (zumindest) drei zweite Sammelschienen-Öffnungen bzw. Sammelschienen-Leiter-Öffnungen zur separaten Aufnahme von jeweils einem der drei Sammelschienen-Leiter. Die drei zweiten Sammelschienen-Öffnungen sind auf einer den drei ersten Sammelschienen-Öffnungen gegenüberliegenden Seite des Gehäuses angeordnet. Hier kann eine gegenüberliegende Anordnung auch schräg gegenüberliegend bedeuten. Hierin bedeutet gegenüberliegend, dass die Öffnungen verschieden orientiert sind, insbesondere um 180 Grad verschieden orientiert sein können, und dass eine Verbindungslinie zwischen einer der ersten Sammelschienen-Öffnungen und einer der zweiten Sammelschienen-Öffnungen zumindest ein Stück des Gehäuse-Inneren durchläuft. Das Gehäuse umfasst weiter (zumindest) drei Abgangsleiter-Öffnungen zur separaten Aufnahme von jeweils einem von drei Abgangs-Leitern, genauer Abgangs-Nominalleitern der Schaltanlage. Die drei Abgangsleiter-Öffnungen sind flächenmäßig in einer zweiten Öffnungs-Ebene und entlang einer zweiten Gerade angeordnet. Die drei ersten bzw. zweiten Sammelschienen-Öffnungen bilden eine erste bzw. zweite Sammelschienen-Anschlussgruppe, und die drei Abgangsleiter-Öffnungen bilden eine Abgangsleiter-Anschlussgruppe.

Gemäß einem weiteren Aspekt wird ein Gehäuse für ein Schaltanlagenmodul einer Schaltanlage vorgeschlagen, wobei die Schaltanlage zumindest eine Sammelschiene mit drei Sammelschienen-Leitern umfasst, und wobei das Gehäuse einen Gasraum zur Aufnahme eines Isoliergases für das Schaltanlagenmodul bildet und umfasst: eine erste Sammelschienen-Anschlussgruppe mit drei ersten Sammelschienen-Öffnungen zur separaten Aufnahme von jeweils einem der drei Sammelschienen-Leiter, wobei die drei ersten Sammelschienen-Öffnungen so entlang einer ersten Gerade angeordnet sind, dass die jeweiligen Mittelsenkrechten zu jeder der drei ersten Sammelschienen-Öffnungen gemeinsam in einer Sammelschienen-Normalebene liegen; eine zweite Sammelschienen-Anschlussgruppe mit drei zweiten Sammelschienen-Öffnungen zur separaten Aufnahme von jeweils einem der drei Sammelschienen-Leiter, wobei die drei zweiten Sammelschienen-Öffnungen auf einer den drei ersten Sammelschienen-Öffnungen gegenüberliegenden Seite des Gehäuses angeordnet sind; und eine Abgangsleiter-Anschlussgruppe mit drei Abgangsleiter-Öffnungen zur separaten Aufnahme von jeweils einem von drei Abgangs-Nominalleitern der Schaltanlage, wobei die drei Abgangsleiter-Öffnungen so entlang einer zweiten Gerade angeordnet sind, dass die die jeweiligen Mittelsenkrechten zu jeder der drei Abgangsleiter-Öffnungen in einer gemeinsamen Abgangs-Normalebene liegen, wobei die zweite Gerade im Wesentlichen senkrecht zur ersten Geraden verläuft.

Die zweite Gerade verläuft in Ausführungsformen (d.h. gemäß einem vorteilhaften, aber nicht zwingenden Aspekt der Erfindung, was auch durch den Ausdruck "insbesondere" ausgedrückt werden kann) gegenüber der ersten Gerade geneigt (d.h. nicht parallel; die Geraden können sich schneiden oder zueinander windschief stehen). In Ausführungsformen verläuft die zweite Gerade senkrecht zur ersten Gerade. Alternativ hierzu sind auch Ausführungsformen möglich, in denen die die zweite Gerade parallel zur ersten Gerade verläuft. In weiteren Ausführungsformen erstreckt sich die zweite Öffnungs-Ebene rechtwinklig zu der ersten Öffnungs-Ebene. Aus dieser senkrechten Anordnung der zweiten Gerade bzw. Öffnungs-Ebene gegenüber der ersten Gerade bzw. Öffnungs-Ebene ergeben sich Vorteile besonders hinsichtlich der vielseitigen Einsetzbarkeit des Sammelschienengehäuses in einer GIS.

Gemäß einem Aspekt verlaufen die erste Gerade, die zweite Gerade, die erste Öffnungs-Ebene bzw. die zweite Öffnungs-Ebene gemäß zumindest einer der folgenden Anordnungen: (a) Die zweite Öffnungs-Ebene ist quer, in Ausführungsformen senkrecht zu der ersten Öffnungs-Ebene angeordnet; (b): Die zweite Gerade (6) ist gegenüber der ersten Gerade so versetzt, dass sich die erste und die zweite Gerade nicht schneiden; (c): Die zweite Gerade verläuft geneigt, in Ausführungsformen senkrecht zu der ersten Öffnungs-Ebene; und / oder (d) Die erste Gerade verläuft parallel zu der zweiten Öffnungs-Ebene.

Gemäß einem Aspekt bildet das Innenvolumen des Gehäuses einen zusammenhängenden Gasraum, wobei die drei ersten Sammelschienen-Öffnungen, die drei zweiten Sammelschienen-Öffnungen, und die drei Abgangsleiter-Öffnungen jeweils einen separaten Zugang zum Gasraum von außerhalb des Gehäuses zur Verfügung stellen oder bilden. Der Gasraum steht also mit den drei ersten und zweiten Sammelschienen-Öffnungen und mit den drei Abgangsleiter-Öffnungen in Verbindung. Gemäß einem Aspekt sind die drei zweiten Sammelschienen-Öffnungen ) flächenmäßig in einer dritten Öffnungs-Ebene und entlang einer dritten Gerade angeordnet, wobei die dritte Öffnungs-Ebene parallel zu der ersten Öffnungs-Ebene ist und die dritte Gerade parallel zur ersten Gerade ist. Insbesondere kann eine jede der drei zweiten Sammelschienen-Öffnungen paarweise gegenüber einer jeweiligen der drei ersten Sammelschienen-Öffnungen angeordnet sein und mit dieser ein jeweiliges Sammelschienen-Öffnungs-Paar zur Aufnahme eines jeweiligen durchgehenden geraden Sammelschienen-Leiterabschnitts dazwischen bilden, wobei sich der gerade Sammelschienen-Leiterabschnitt insbesondere senkrecht zur ersten und dritten Öffnungs-Ebene erstreckt. Gemäß einem weiteren Aspekt begrenzt jede der drei ersten Sammelschienen-Öffnungen mit der jeweiligen der drei zweiten Sammelschienen-Öffnungen einen sich dazwischen erstreckenden, zylinderförmigen Gasraumabschnitt des Gasraums stirnseitig. Gemäß einem weiteren Aspekt erstrecken sich die zylinderförmigen Gasraumabschnitte jeweils entlang einer geraden Längsachse. Der Querschnitt der Gasraumabschnitte kann beispielsweise kreisförmig, oval, oder ungleichförmig sein.

Gemäß einem Aspekt ist eine Gehäuse-Außenfläche bezüglich einer konvexen Einhüllenden zumindest partiell eingezogen ausgebildet. Die Einhüllende beschreibt die globale Form der Gehäuse-Außenfläche ohne Rücksicht auf für diese Form irrelevante lokale Elemente wie Schrauben, Griffe, usw. Die Einhüllende wird als diejenige Form verstanden, welche sich ergibt, wenn man das Gehäuse mit einer gespannten Folie umwickelt, wobei die die Einhüllende definierende Folie jeweils nur an den Vorsprüngen, etwa der Kontur der flanschartigen Adapterabschnitte und dergleichen aufliegen würde. Die Gehäuse-Außenfläche hat somit konkave Einbuchtungen gegenüber der Einhüllenden. Diese Einbuchtungen können in einem Übergangsbereich zwischen den ersten bzw. zweiten Sammelschienen-Öffnungen und den Abgangsleiter-Öffnungen und / oder in einem Übergangsbereich zwischen den ersten Sammelschienen-Öffnungen und den zweiten Sammelschienen-Öffnungen vorhanden sein.

Gemäß einem Aspekt sind die jeweiligen Mitten der drei ersten Sammelschienen-Öffnungen in einem gleichmäßigen Einheits-Abstand zueinander entlang der ersten Gerade aufgereiht. Die jeweiligen Mitten der drei Abgangsleiter-Öffnungen können in dem Einheits-Abstand zueinander entlang der zweiten Gerade aufgereiht sein, und / oder die jeweiligen Mitten der drei zweiten Sammelschienen-Öffnungen können in dem Einheits-Abstand zueinander entlang einer dritten Gerade aufgereiht sein. Gemäß einem Aspekt ist eine zu der zweiten Öffnungs-Ebene senkrechte und die zweite Gerade enthaltende Abgangs-Normalebene zwischen einer äußeren und einer mittleren der ersten Sammelschienen-Öffnungen angeordnet, und insbesondere mittig zwischen diesen Sammelschienen-Öffnungen angeordnet. Gemäß einem Aspekt umfasst das Gehäuse Metall, insbesondere Aluminium. Gemäß einem Aspekt ist das Gehäuse ein Gussteil, insbesondere formgegossen.

Gemäß einem Aspekt wird ein orthogonales x-y-z-Bezugssystem dadurch definiert, dass die erste Gerade die z-Richtung definiert. Gemäß einem Aspekt definiert die zweite Gerade eine zur z-Richtung senkrechte y-Richtung, und damit auch eine zur z- und y-Richtung senkrechte x-Richtung. Gemäß einem Aspekt ist die zweite Gerade gegenüber der ersten Gerade der x-Richtung versetzt, so dass sich die erste und die zweite Gerade nicht schneiden. Gemäß einem Aspekt ist die dritte Gerade parallel zur z-Richtung. Gemäß einem Aspekt ist die erste Öffnungs-Ebene parallel zur z- und y-Richtung. Gemäß einem Aspekt ist die zweite Öffnungs-Ebene parallel zur x- und y-Richtung.

Gemäß einem Aspekt umfasst das Gehäuse drei zylinderabschnitt-artig gestaltete Sammelschienen-Gehäuseabschnitte, wobei die drei ersten und optional auch die zweiten Sammelschienen-Öffnungen an einer Stirnfläche eines jeweiligen der Sammelschienen-Gehäuseabschnitte angeordnet sind, und wobei die drei Sammelschienen-Gehäuseabschnitte insbesondere voneinander beabstandet angeordnet sind, d.h. der Abstand zwischen den Zylinderachsen ist größer ist als der Zylinder-Durchmesser der Sammelschienen-Gehäuseabschnitte, wobei der Zylinder-Durchmesser durch die Gehäuse-Aussenseite vorgegeben ist. Gemäß einem Aspekt sind die drei Sammelschienen-Gehäuseabschnitte in einem gleichmäßigen Abstand zueinander entlang der ersten Gerade in z-Richtung aufgereiht. Die zylinderabschnitt-artig gestalteten Sammelschienen-Gehäuseabschnitte definieren ein zylinderartiges Sammelschienen-Innenvolumen. Gemäß einem Aspekt erstreckt die Zylinder-Achse sich in y-Richtung.

Gemäß einem Aspekt umfasst die erste Sammelschienen-Anschlussgruppe für jede der drei ersten Sammelschienen-Öffnungen je einen hervorstehenden Rohrstummel, der in der jeweiligen der ersten Sammelschienen-Öffnungen mündet. Gemäß einem Aspekt umfasst die zweite Sammelschienen-Anschlussgruppe für jede der drei zweiten Sammelschienen-Öffnungen je einen hervorstehenden Rohrstummel, der in der jeweiligen der zweiten Sammelschienen-Öffnungen mündet. Gemäß einem Aspekt sind die ersten Sammelschienen-Öffnungen und / oder die zweiten Sammelschienen-Öffnungen und / oder die Abgangs-Öffnungen an einer Stirnfläche des jeweiligen Rohrstummels angeordnet. Je nach Anforderungen und Ausführungsformen sind die Rohrstummel voneinander beabstandet, d.h. nicht miteinander verschmolzen, oder miteinander verschmolzen.

Gemäß einem Aspekt umfasst die erste Sammelschienen-Anschlussgruppe für jede der drei ersten Sammelschienen-Öffnungen je einen die jeweilige Öffnung umfangsmäßig umgebenden Flansch, wobei der Flansch optional von einem Bereich hinter der Öffnung und außerhalb des Gehäuses aus zugänglich ist. Die Flansche der ersten Sammelschienen-Öffnungen und / oder der zweiten Sammelschienen-Öffnungen und / oder der Abgangs-Öffnungen sind je nach Ausführungsform in einen gemeinsamen Wandabschnitt einer Hauptkammer des Gehäuses vollintegriert, teilintegriert, oder durch Rohrstummel von einem Wandabschnitt der Hauptkammer beabstandet und als eigenständige Flansche gestaltet. Je nach Ausführungsform sind alle Flansche der ersten Sammelschienen-Öffnungen und / oder der zweiten Sammelschienen-Öffnungen und / oder der Abgangs-Öffnungen separat ausgestaltet und voneinander beabstandet, oder zumindest zwei der Flansche sind miteinander zu einer Flansch-Gruppe verbunden. Beispielsweise können alle Flansche der ersten Sammelschienen-Öffnungen und / oder der zweiten Sammelschienen-Öffnungen und / oder der Abgangs-Öffnungen miteinander zu einer jeweiligen ersten Sammelschienen-Flansch-Gruppe und / oder zweiten Sammelschienen-Flansch-Gruppe und / oder Abgangs-Flansch-Gruppe verbunden sein.

Gemäß einem Aspekt sind die die ersten bzw. zweiten Sammelschienen-Öffnungen jeweils zur y-Richtung hin gerichtet, d.h. ihre Normale erstreckt sich in y-Richtung. Somit spannen die zueinander parallelen Normalen der Öffnungen eine Sammelschienen-Ebene (y-z-Ebene) auf, so dass Nominalleiter, die die Öffnungen zentral und senkrecht verlassen, in der y-z-Ebene liegen. Die Sammelschienen-Öffnungen sind von Flanschen umgeben. Die Flansche liegen in einer gemeinsamen Ebene, einer x-z-Ebene. Jede der drei Sammelschienen-Öffnungen weist einen eigenen separaten Flansch auf. Der Flansch ist insbesondere mit einer Befestigungeinrichtung für einen Schott-Insolator versehen. Die Befestigungseinrichtung umfasst insbesondere in dem Flansch gebildete Durchbrüche für Befestigungsschrauben.

Gemäß einem Aspekt umfasst das Gehäuse drei Abgangsleiter-Gehäuseabschnitte, wobei die drei Abgangsleiter-Öffnungen an jeweils einem der drei Abgangsleiter-Gehäuseabschnitte angeordnet sind. Gemäß einem Aspekt verbindet zumindest einer der drei Abgangsleiter-Gehäuseabschnitte die Innenvolumina von jeweils zumindest zweien der drei Sammelschienen-Gehäuseabschnitte des Gasraums fluid miteinander. Gemäß einem Aspekt verbindet jeder der drei Abgangsleiter-Gehäuseabschnitte die Innenvolumina von jeweils zumindest zweien der Sammelschienen-Gehäuseabschnitte miteinander. Gemäß einem Aspekt verbindet zumindest einer der drei Abgangsleiter-Gehäuseabschnitte die Innenvolumina der drei Sammelschienen-Gehäuseabschnitte miteinander. Gemäß einem Aspekt verbindet jeder der drei Abgangsleiter-Gehäuseabschnitte die Innenvolumina der drei Sammelschienen-Gehäuseabschnitte miteinander. Gemäß einem Aspekt verbindet ein erster Abgangsleiter-Gehäuseabschnitt der drei Abgangsleiter-Gehäuseabschnitte die drei Sammelschienen-Gehäuseabschnitte direkt fluid miteinander, ein zweiter Abgangsleiter-Gehäuseabschnitt verbindet lediglich zwei der drei Sammelschienen-Gehäuseabschnitte direkt fluid miteinander, und ein dritter Abgangsleiter-Gehäuseabschnitt ist lediglich mit einem einzigen der drei Sammelschienen-Gehäuseabschnitte direkt fluid verbunden, oder aber auch der dritte Abgangsleiter-Gehäuseabschnitt verbindet die drei Sammelschienen-Gehäuseabschnitte direkt fluid miteinander. Gemäß einem Aspekt ist der erste Abgangsleiter-Gehäuseabschnitt den ersten Sammelschienen-Öffnungen nächstliegend, der zweite Abgangsleiter-Gehäuseabschnitt mittig, und der dritte Abgangsleiter-Gehäuseabschnitt den zweiten Sammelschienen-Öffnungen nächstliegend angeordnet. Gemäß einem weiteren Aspekt verbindet ein den ersten Sammelschienen-Öffnungen nächstliegender der drei Abgangsleiter-Gehäuseabschnitte die drei Sammelschienen-Gehäuseabschnitte fluid miteinander, und / oder ein mittig angeordneter der drei Abgangsleiter-Gehäuseabschnitte verbindet lediglich zwei der drei Sammelschienen-Gehäuseabschnitte fluid miteinander, und / oder ein den zweiten Sammelschienen-Öffnungen nächstliegender der drei Abgangsleiter-Gehäuseabschnitte ist direkt lediglich mit einem einzigen der drei Sammelschienen-Gehäuseabschnitte fluid verbunden.

Gemäß einem Aspekt sind die Abgangsleiter-Gehäuseabschnitte zylinderabschnitt-artig gestaltet und weisen ein zylinderartiges Innenvolumen auf. Die Abgangsleiter-Gehäuseabschnitte sind voneinander beabstandet. Der Abstand zwischen ihren Zylinderachsen bzw. Mitten ist größer als der Zylinder-Außendurchmesser bzw. als der doppelte Krümmungs-Radius ihrer Wandabschnitte. Gemäß einem Aspekt sind die Abgangsleiter-Gehäuseabschnitte in gleichmäßigem Abstand voneinander entfernt entlang der zweiten Gerade angeordnet. Gemäß einem Aspekt erstrecken sich die Zylinder-Achsen der Abgangsleiter-Gehäuseabschnitte in x-Richtung. Gemäß einem Aspekt sind jeweilige geschlossene Abschluss-Stücke an einer jeweiligen Stirnseite der Abgangsleiter-Gehäuseabschnitte angebracht.

Gemäß einem Aspekt umfasst die Abgangsleiter-Anschlussgruppe für jede der drei Abgangsleiter-Öffnungen je einen die jeweilige Abgangsleiter-Öffnung umfangsmäßig umgebenden Flansch, wobei der Flansch optional von einem Bereich hinter der Abgangsleiter-Öffnung und außerhalb des Gehäuses aus zugänglich ist. Gemäß einem Aspekt sind die Abgangsleiter-Öffnungen jeweils zu einer zur ersten und zweiten Geraden senkrecht stehenden Richtung hin gerichtet bzw. zu einer zu der zweiten Öffnungs-Ebene senkrecht stehenden Richtung hin gerichtet. Gemäß einem Aspekt erstreckt sich die Normale der Abgangsleiter-Öffnungen in x-Richtung. Somit spannen die Abgangsleiter-Öffnungen eine Abgangs-Normalebene auf (von der zweiten Gerade und den zueinander parallelen Normalen der Öffnungen aufgespannte Ebene), so dass Nominalleiter, die die Abgangsleiter-Öffnungen zentral und senkrecht verlassen, in der Abgangs-Normalebene liegen. Die Abgangs-Normalebene kann eine x-y-Ebene sein.

Gemäß einem Aspekt schneidet die Abgangs-Normalebene eine von den Sammelschienen-Öffnungen entsprechend gebildete Sammelschienen-Normalebene in einer Schnittlinie, die gegenüber jeder der Mittelachsen der Sammelschienen-Öffnungen in z-Richtung versetzt ist. Insbesondere ist die Schnittlinie außerhalb der Sammelschienen-Öffnungen, insbesondere zwischen zwei der Sammelschienen-Öffnungen angeordnet.

Gemäß einem Aspekt sind die Abgangsleiter-Öffnungen von Flanschen umgeben. Die Flansche liegen in einer gemeinsamen Ebene, z.B. einer y-z-Ebene. Jede der drei Abgangsleiter-Öffnungen weist einen eigenen separaten Flansch auf. Der Flansch ist insbesondere mit einer Befestigungseinrichtung für einen Schottisolator versehen. Die Befestigungseinrichtung umfasst insbesondere in dem Flansch gebildete Durchbrüche für Befestigungsschrauben.

Gemäß einem Aspekt weist das Gehäuse zumindest ein Durchbruch auf, welches ein von dem Gehäuse definiertes zusammenhängendes Innenvolumen durchstößt. Gemäß einem Aspekt durchstößt der Durchbruch auch die Außenhülle des Gehäuses. Gemäß einem Aspekt ist das Durchbruch zwischen zweien, insbesondere einem äußeren und einem mittleren, der Sammelschienen-Gehäuseabschnitte angeordnet. Das Durchbruch ist gemäß einem Aspekt zwischen zweien, insbesondere den beiden äußeren, der Abgangsleiter-Gehäuseabschnitte angeordnet. Gemäß einem Aspekt weist das Gehäuse insbesondere eine Vielzahl von Durchbrüchen, z.B. zwei oder drei Durchbrüche, auf.

Gemäß einem Aspekt umfasst das Gehäuse eine Kühlvorrichtung zum Erhöhen der Wärmeabfuhr aus dem Innenvolumen des Gehäuses. Gemäß einem Aspekt ist die Kühlvorrichtung an einem Abschluss-Stück des Abgangsleiter-Gehäuseabschnitts angeordnet, insbesondere an einem oberen Abschluss-Stück. Gemäß einem Aspekt umfasst das Gehäuse zumindest einen insbesondere zylinderartig geformten Betätigungswellen-Gehäuseabschnitt zur Aufnahme einer Betätigungswelle. Die Betätigungswelle ist für die Betätigung von im Innenvolumen des Gehäuses angeordnete bzw. anordenbare Schaltelemente ausgelegt. In Ausführungsformen erstreckt sich der Betätigungswellen-Gehäuseabschnitt entlang der drei Abgangsleiter-Gehäuseabschnitte und stellt ein direkt mit dem Inneren der Abgangsleiter-Gehäuseabschnitte in Verbindung stehendes Innenvolumen für eine sich entlang einer Geraden erstreckende Betätigungswelle zur Verfügung. Der Betätigungswellen-Gehäuseabschnitt kann sich entlang der drei Abgangsleiter-Gehäuseabschnitte erstrecken und ein direkt mit dem Inneren der Abgangsleiter-Gehäuseabschnitte in Verbindung stehendes Innenvolumen für eine gerade Betätigungswelle zur Verfügung stellen. Gemäß einem Aspekt erstreckt sich eine Zylinderachse des Betätigungswellen-Gehäuseabschnitts in y-Richtung bzw. parallel zur zweiten Geraden. Gemäß einem Aspekt ist der Betätigungswellen-Gehäuseabschnitt in x-Richtung versetzt gegenüber den Zylinderachsen der Sammelschienen-Gehäuseabschnitte angeordnet. Der Versatz beträgt insbesondere die Hälfte des Abstands der Zylinderachsen der Sammelschienen-Gehäuseabschnitte voneinander.

Gemäß einem Aspekt hat das Gehäuse Symmetrie-Eigenschaften. Gemäß diesem Aspekt sind die Menge der Öffnungen umfassend die ersten Sammelschienen-Öffnungen, die zweiten Sammelschienen-Öffnungen und die Abgangs-Öffnungen spiegelsymmetrisch zu einer Spiegel-Ebene angeordnet, und gemäß einem besonderen Aspekt ist die Spiegel-Ebene parallel zu der ersten Öffnungs-Ebene angeordnet. Gemäß einem weiteren Aspekt ist das Gehäuse im Wesentlichen spiegelsymmetrisch zu der Spiegel-Ebene aufgebaut. Im Wesentlichen spiegelsymmetrisch bedeutet eine Symmetrie bezüglich der Sammelschienen- und Abgangs-Öffnungen und bezüglich der Hauptgeometrie des Gehäuses, nicht aber bezüglich etwaiger Hilfsanschlüsse und sonstiger unwesentlicher Details. Quantitativ ausgedrückt, darf das bei Spiegelung nicht überlappende Volumen des Gasraums nicht mehr als 5% des gesamten Volumens des Gasraums betragen. Die Spiegel-Ebene verläuft bei einer Ausführungsform des Gehäuses durch eine mittlere Abgangsleiter-Öffnung, welche zwischen den zwei restlichen Abgangsleiter-Öffnungen angeordnet ist.

Gemäß einem Aspekt ist das Gehäuse für ein Schaltmodul einer Hochspannungs-Schaltanlage ausgelegt, also für Spannungen von mindestens 480 kV. Der Abstand der Mitten der Sammelschienen-Öffnungen voneinander beträgt gemäß einem Aspekt beispielsweise mindestens 80 cm.

Gemäß einem Aspekt wird ein Schaltanlagenmodul umfassend irgendein hierin beschriebenes Gehäuse vorgeschlagen. Das Schaltanlagenmodul umfasst weiter einen Sammelschienen-Leiterabschnitt umfassend drei Sammelschienen-Phasenleiter, die sich jeweils von einer jeweiligen der ersten Sammelschienen-Anschlussöffnungen zu einer jeweiligen der zweiten Sammelschienen-Anschlussöffnungen erstrecken; und einen Abgangs-Leiterabschnitt umfassend drei Abgangs-Phasenleiter, die sich jeweils zu einer jeweiligen der zweiten Abgangs-Anschlussöffnungen erstrecken. Gemäß einem Aspekt wird umfasst das Schaltanlagenmodul weiter ein Trennschalter-System mit drei Trennschaltern, wobei jeder der drei Trennschalter einen elektrischen Kontakt zwischen einem jeweiligen der Sammelschienen-Phasenleiter und einem jeweiligen der Abgangs-Phasenleiter schaltet. Gemäß einem Aspekt umfasst das Trennschalter-System ein Betätigungssystem zur gemeinsamem Betätigung der drei Trennschalter. Gemäß einem Aspekt umfasst das Betätigungssystem eine Betätigungswelle. In Ausführungsformen erstreckt sich die Betätigungswelle entlang des Betätigungswellen-Gehäuseabschnitts. Gemäß einem Aspekt erstrecken die Sammelschienen-Phasenleiter sich zumindest im Bereich der ersten und der zweiten Sammelschienen-Öffnungen in einer Sammelschienen-Ebene (y-z-Ebene bzw. die Ebene, die die erste Gerade enthält und die senkrecht auf der ersten Öffnungs-Ebene steht). Gemäß einem Aspekt erstrecken die Abgangs-Phasenleiter sich zumindest im Bereich der Abgangsleiter-Öffnungen in einer Abgangs-Normalebene (x-y-Ebene bzw. die Ebene, die die zweite Gerade enthält und die senkrecht auf der zweiten Öffnungs-Ebene steht).

Gemäß einem Aspekt wird ein Schaltfeld umfassend irgendein hierin beschriebenes Schaltanlagenmodul vorgeschlagen. Gemäß einem Aspekt umfasst das Schaltfeld weiter: einen Sammelschienen-Leiterabschnitt umfassend drei Sammelschienen-Phasenleiter, die sich jeweils von einer jeweiligen der ersten Sammelschienen-Anschlussöffnungen zu einer jeweiligen der zweiten Sammelschienen-Anschlussöffnungen erstrecken; und einen Abgangs-Leiterabschnitt umfassend drei Abgangs-Phasenleiter, die sich jeweils zu einer jeweiligen der zweiten Abgangs-Anschlussöffnungen erstrecken. Gemäß einem Aspekt umfasst das Schaltfeld weiter: ein Trennschalter-System mit drei öffenbaren Trennschaltern, wobei jeder der drei Trennschalter einen elektrischen Kontakt zwischen einem jeweiligen der Sammelschienen-Phasenleiter und einem jeweiligen der Abgangs-Phasenleiter herstellt.

Gemäß einem Aspekt wird eine Schaltanlage (Unterstation) umfassend irgendein hierin beschriebenes Schaltanlagenmodul vorgeschlagen. Die Schaltanlage umfasst weiter zumindest eine Sammelschiene, wobei der Sammelschienen-Leiterabschnitt einen Längsabschnitt der Sammelschiene bildet. Gemäß einem Aspekt ist die Sammelschiene zumindest abschnittsweise einphasig gekapselt. Gemäß einem Aspekt sind die Abgangs-Nominalleiter zumindest abschnittsweise einphasig gekapselt. Gemäß einem Aspekt erstrecken sich die Sammelschienen-Leiter jeweils in y-Richtung, so dass die Sammelschiene eine y-z-Ebene aufspannt. Gemäß einem Aspekt erstrecken sich die Abgangs-Nominalleiter in einer zur y- und z-Richtung senkrechte x-Richtung, so dass die Abgangsleiter eine x-y-Ebene aufspannen. Gemäß einem Aspekt wird eine Schaltanlage vorgeschlagen, die ein Schaltanlagenmodul gemäß irgendeiner der hierin beschriebenen Ausführungsformen und Aspekte und zumindest eine (gasisolierte gekapselte) Sammelschiene umfasst, wobei die Sammelschiene den Sammelschienen-Leiterabschnitt umfasst bzw. die Sammelschienen-Leiterabschnitte mit dem zugehörigen Sammelschienen-Gehäuseabschnitt einen Längsabschnitt der Sammelschiene bilden. Gemäß einem Aspekt erstreckt sich die Sammelschiene über mindestens zwei (je nach Ausführungsform benachbarte) Schaltanlagenmodule gemäß irgendeiner der hierin beschriebenen Ausführungsformen.

Die Angabe, dass das Gehäuse drei Abgangsleiter-Öffnungen umfasst, schließt nicht aus, dass es noch weitere Abgangsleiter-Öffnungen umfasst, z.B. insgesamt vier oder sechs Abgangsleiter-Öffnungen. Soweit nicht ausdrücklich anders angegeben, bedeutet eine Zahlenangabe somit eine Mindestzahl. Gemäß einem besonderen Teil-Aspekt ist jedoch genau diese Zahl gemeint. Gemäß diesem Teil-Aspekt bedeutet z.B. "drei Abgangsleiter-Öffnungen" dann "genau drei Abgangsleiter-Öffnungen". Entsprechendes gilt in Bezug auf die Anzahl der Abgangsleiter und der ersten und zweiten Sammelschienen-Öffnungen und - Leiter.

Im Folgenden werden einige weitere allgemeine Aspekte der Erfindung und mögliche Variationen der Ausführungsformen beschrieben. Gemäß einem Aspekt wird ein Schaltanlagenmodul für eine Schaltanlage mit einem Gehäuse, das einen gemeinsamen Gasraum zur Aufnahme eines Isoliergases für das Schaltanlagenmodul bildet. Das Schaltanlagenmodul umfasst: eine Sammelschienen-Leiteranordnung umfassend drei in dem gemeinsamen Gasraum aufgenommene, insbesondere sich in eine y-Richtung erstreckende, Sammelschienen-Leiterabschnitte; eine Abgangsleiter-Anschlussgruppe mit drei Abgangsleiter-Öffnungen, insbesondere zur separaten Aufnahme von jeweils einem von drei Abgangs-Leitern, genauer Abgangs-Leiterabschnitten der Schaltanlage, und mit drei, insbesondere in dem gemeinsamen Gasraum aufgenommenen sich quer zur y-Richtung in eine x-Richtung erstreckenden, sich zu einer jeweiligen der Abgangsleiter-Öffnungen hin erstreckenden Abgangs-Leiterabschnitten (z.B. von einem Inneren des Gehäuses und/oder von der Sammelschienen-Leiteranordnung her); und drei Trennschalter, welche jeweils über eine Trennstelle einen jeweiligen der Sammelschienen-Leiterabschnitte mit einem jeweiligen der Abgangsleiterabschnitte verbinden. Durch die drei Abgangsleiter-Öffnungen wird eine Abgangs-Normalebene definiert, welche parallel zu den Mittelsenkrechten der Abgangsleiter-Öffnungen ist. Eine besondere Abgangs-Normalebene, auch als Abgangs-Normal-Mittelebene bezeichnet, ist als die Ebene definiert, welche die Mittelsenkrechten der Abgangsleiter-Öffnungen enthält. Die Mittelsenkrechten sind die Normalen zu den Öffnungen - d.h. zu Öffnungsebenen, entlang denen die jeweiligen Abgangsleiter-Öffnungen flächenmäßig angeordnet sind - und verlaufen durch den Mittelpunkt der durch die Öffnungen in diesen Öffnungsebenen definierten Flächen. Wenn die Öffnungen keinen Mittelpunkt haben, sind die Mittelsenkrechten als die Normalen definiert, die durch den Schwerpunkt der Flächen verlaufen, die in den Öffnungsebenen definiert sind. Die Trennstellen sind räumlich so angeordnet, dass zumindest die Trennstelle eines ersten der Trennschalter auf einer ersten Seite der Abgangs-Normalebene angeordnet ist und die Trennstelle eines zweiten der Trennschalter auf einer zweiten, der ersten Seite gegenüberliegenden Seite der Abgangs-Normalebene angeordnet ist, d.h. dass es (irgend)eine Abgangs-Normalebene gibt, die diese Bedingung erfüllt. Alles hierin zu der Abgangs-Normalebene gesagte gilt gemäß einem Aspekt der Erfindung insbesondere für die Abgangs-Normal-Mittelebene.

Gemäß einem Aspekt wird ein Schaltanlagenmodul für eine Schaltanlage mit einem Gehäuse vorgeschlagen, das einen Gasraum zur Aufnahme eines Isoliergases für das Schaltanlagenmodul bildet. Das Schaltanlagenmodul umfasst eine Sammelschienen-Leiteranordnung umfassend drei, insbesondere sich in eine y-Richtung erstreckende, Sammelschienen-Leiterabschnitte; eine Abgangsleiteranordnung umfassend drei, sich insbesondere quer zur y-Richtung in eine x-Richtung erstreckende Abgangsleiterabschnitte; drei Trennschalter, welche jeweils über eine Trennstelle einen der Sammelschienen-Leiterabschnitte mit einem jeweiligen der Abgangsleiterabschnitte verbinden; und eine Betätigungswelle zur Betätigung der Trennschalter, welche eine, sich insbesondere in eine y-Richtung erstreckende, Betätigungsachse aufweist. Die Trennstellen und die Betätigungsachse sind räumlich so angeordnet, dass zumindest die Trennstelle eines ersten der Trennschalter auf einer ersten Seite einer Trennschalter-Ebene angeordnet ist und die Trennstelle eines zweiten der Trennschalter auf einer zweiten, der ersten Seite gegenüberliegenden Seite der Trennschalter-Ebene angeordnet ist. Die Trennschalter-Ebene ist wie folgt festgelegt durch die Betätigungsachse und durch eine Verbindungsgerade, welche senkrecht zur Betätigungsachse zwischen einer Trennstelle und der Betätigungsachse verläuft bzw. die Trennstelle und die Betätigungsachse verbindet: Die Trennschalter-Ebene ist senkrecht zu der Verbindungsgeraden ausgerichtet und enthält die Betätigungsachse. Die Trennschalter -Ebene lässt sich auch durch eine Verbindungsgerade, welche senkrecht zur Betätigungsachse zwischen einer Trennstelle und der Betätigungsachse verläuft, und die Betätigungsachse definieren, nämlich dadurch, dass die Trennschalter-Ebene senkrecht zu der Verbindungsgeraden ausgerichtet ist und die Betätigungsachse enthält.

Gemäß einem Aspekt sind die Trennstellen zweier Trennschalter auf der ersten Seite der Abgangs-Normalebene angeordnet. Gemäß einem Aspekt enthält die Abgangs-Normalebene die Mittelsenkrechten von zumindest zweien der Abgangsleiter-Öffnungen. In Ausführungsformen (d.h. gemäß einem optionalen Aspekt der Erfindung, der zwar nicht zwingend ist, aber möglicherweise mit zusätzlichen Vorteilen verbunden ist) enthält die Abgangs-Normalebene die Mittelsenkrechten von jeder der Abgangsleiter-Öffnungen.

Gemäß einem Aspekt verbindet ein erster der Trennschalter einen ersten der Sammelschienen-Leiterabschnitte mit einem ersten der Abgangs-Leiterabschnitte, ein zweiter der Trennschalter einen zweiten der Sammelschienen-Leiterabschnitte mit einem zweiten der Abgangs-Leiterabschnitte, und ein dritter der Trennschalter einen dritten der Sammelschienen-Leiterabschnitte mit einem dritten der Abgangs-Leiterabschnitte. Gemäß einem Aspekt ist der erste Sammelschienen-Leiterabschnitt außen, der zweite Sammelschienen-Leiterabschnitt mittig, und der dritte Sammelschienen-Leiterabschnitt außen angeordnet. Gemäß einem Aspekt ist der erste Abgangs-Leiterabschnitt außen, der zweite Abgangs-Leiterabschnitt mittig, und der dritte Abgangs-Leiterabschnitt außen angeordnet.

Gemäß einem Aspekt umfasst das Schaltanlagenmodul eine Betätigungswelle zur Betätigung der Trennschalter, welche eine, sich insbesondere in eine y-Richtung erstreckende, Betätigungsachse aufweist bzw. sich entlang dieser erstreckt und insbesondere um diese rotierbar ist. Gemäß einem Aspekt ist eine Verbindungsgerade als kürzeste Verbindung zwischen einer der Trennstellen und der Betätigungsachse definiert. Die Trennstelle eines Trennschalters ist als Punkt definiert, nämlich als Mittelpunkt der Trennstrecke zwischen zwei sich am nächsten liegenden Leiterenden beidseitig eines geöffneten Schalters. Gemäß dem Aspekt gilt folgendes für jede Trennschalter-Ebene, welche jeweils durch eine solche Verbindungsgerade und die Betätigungsachse festgelegt ist und welche jeweils senkrecht zu der Verbindungsgeraden ausgerichtet ist und die Betätigungsachse enthält: zumindest die Trennstelle eines ersten der Trennschalter ist auf einer ersten Seite der Trennschalter-Ebene angeordnet; und die Trennstelle eines zweiten der Trennschalter ist auf einer zweiten, der ersten Seite gegenüberliegenden Seite der Trennschalter-Ebene angeordnet. Eine weitere besondere Abgangs-Normalebene, auch als Betätigungsachsen-Ebene bezeichnet, ist die Abgangs-Normalebene, die die Betätigungsachse enthält. Gemäß einem Aspekt gelten die jeweiligen Definitionen und Aussagen bezüglich der Abgangs-Normalebene, die durch die Abgangsleiter-Öffnungen definiert ist, auch z.B. für die Trennschalter-Ebene und/oder für die Abgangs-Normalebene und/oder für die Abgangs-Normalebene und/oder für die Betätigungsachsen-Ebene. Gemäß einem Aspekt verläuft die Betätigungsachse in der Abgangs-Normalebene, insbesondere der Abgangs-Normalebene.

Gemäß einem Aspekt erstrecken die Sammelschienen-Leiterabschnitte sich parallel zu der Abgangs-Normalebene. Gemäß einem Aspekt sind die Sammelschienen-Leiterabschnitte räumlich außerhalb der Abgangs-Normalebene, insbesondere de Abgangs-Normalebene angeordnet. Gemäß einem Aspekt sind die Sammelschienen-Leiterabschnitte räumlich so angeordnet, dass zumindest ein erster der Sammelschienen-Leiterabschnitte auf der ersten Seite der Abgangs-Normalebene angeordnet ist und zumindest ein zweiter der Sammelschienen-Leiterabschnitte auf der zweiten, der ersten Seite gegenüberliegenden Seite der Abgangs-Normalebene angeordnet ist. Gemäß einem Aspekt umfasst der zumindest eine erste der Sammelschienen-Leiterabschnitte zwei Sammelschienen-Leiterabschnitte. Gemäß einem Aspekt bildet jeder der Sammelschienen-Leiterabschnitte mit der mit ihm in Verbindung stehenden jeweiligen Trennstelle ein Paar. Jede der Trennstellen ist auf der gleichen, also ersten oder zweiten, Seite der Abgangs-Normalebene wie der zu dem jeweiligen Paar zugehörige Sammelschienen-Leiterabschnitt angeordnet. Jeder der Sammelschienen-Leiterabschnitte ist somit auf der gleichen Seite der Abgangs-Normalebene wie die mit ihm in Verbindung stehenden jeweiligen Trennstelle angeordnet. Gemäß einem Aspekt erstreckt jeder der Abgangsleiterabschnitte sich zumindest im Bereich der Abgangsleiter-Öffnungen entlang der Abgangs-Normalebene bzw. der Abgangs-Normalebene.

Gemäß einem Aspekt weist zumindest einer der Trennschalter ein Schaltelement auf, das zum Schalten geradlinig längs einer Schalt-Richtung beweglich ist. In Ausführungsformen verläuft diese Schalt-Richtung quer, d.h. nicht parallel, zur Abgangs-Normalebene bzw. verläuft sogar senkrecht zur Abgangs-Normalebene bzw. verläuft in z-Richtung bzw. entlang der Verbindungsgeraden. Die Schalt-Richtung ist gemäß einem Aspekt parallel zu der ersten bzw. der zweiten Öffnungs-Ebene Gemäß einem Aspekt umfasst das Schaltanlagenmodul eine Betätigungswelle zur Betätigung des Schaltelements, wobei die Betätigungswelle über ein Getriebe, insbesondere über ein Getriebe zur Umwandlung einer Drehbewegung in eine Längsbewegung, z.B. ein Zahnstangengetriebe, mit dem Schaltelement verbunden ist. Die Betätigungswelle weist eine, z.B. sich in eine y-Richtung erstreckende, Betätigungsachse auf. Gemäß einem Aspekt sind die drei Trennschalter zumindest bezüglich ihres jeweiligen männlichen Schalt-Teils zueinander gleichartig gestaltet. Gemäß einem Aspekt weisen die drei Trenn-Schalter jeweils gleichartig gestaltete Schaltkolben und/oder ein weitestgehend identisches Schaltkolbengehäuse auf. Durch Verwendung dieser identischen Teile können sowohl bei der Herstellung als auch bei der Wartung bzw. Reparatur Abläufe vereinfacht und Kosten eingespart werden.

Gemäß einem Aspekt umfasst das Schaltanlagenmodul eine gemeinsame Betätigungswelle zur Betätigung eines jeden der Trennschalter, welche Betätigungswelle eine insbesondere sich in eine y-Richtung erstreckende Betätigungsachse aufweist. Für jeden der Trennschalter ist eine Verbindungsgerade entlang einer kürzesten Verbindung zwischen einer jeweiligen der Trennstellen und der Betätigungsachse definiert. Die Verbindungsgerade verläuft im Wesentlichen senkrecht zu der Abgangs-Normalebene. Gemäß einem Aspekt verläuft für jeden der Trennschalter die Trennstrecke quer, insbesondere im Wesentlichen senkrecht zu der Abgangs-Normalebene.

Gemäß einem Aspekt ist der Gasraum ein zusammenhängender gemeinsamer Gasraum, und die drei Sammelschienen-Leiterabschnitte und die drei Abgangsleiterabschnitte sind in dem gemeinsamen Gasraum angeordnet. Gemäß einem Aspekt ist weiter zumindest ein zusammenhängendes sich über die drei Trennschalter hinweg erstreckendes Stück bzw. Abschnitt der Betätigungswelle in dem gemeinsamen Gasraum angeordnet.

Gemäß einem Aspekt verläuft für jeden der Trennschalter eine jeweilige Trennstrecke parallel zur ersten und / oder dritten Öffnungs-Ebene. Die Trennstrecke ist so definiert, dass sie zwischen zwei sich am nächsten liegenden Leiterenden beidseitig des jeweiligen geöffneten Schalters verläuft. Gemäß einem Aspekt erstreckt sich zwischen jeder der Trennstellen und dem jeweiligen Sammelschienen-Leiterabschnitt ein jeweiliger Abgangs-Sammelschienenverbinder entlang einer jeweiligen Sammelschienen-Leiterabschnitts-Ebene, wobei die Sammelschienen-Leiterabschnitts-Ebenen zueinander parallel verlaufend angeordnet sind, und in Ausführungsformen parallel zu der ersten Öffnungs-Ebene und der dritten Öffnungs-Ebene sind und zwischen diesen angeordnet sind. Die Sammelschienen-Leiterabschnitts-Ebenen IIIa, IIIb, IIIc erstrecken sich dabei, wie in Fig. 2a gezeigt, beispielsweise parallel zur ersten Ebene E1. Dass sich die Abgangs-Sammelschienenverbinder entlang einer jeweiligen Ebene erstrecken bedeutet, dass die Mittellinie oder neutrale Faser der Abgangs-Sammelschienenverbinder in dieser Ebene angeordnet ist. Gemäß dieser Anordnung werden in einer Ebene angeordnete Leiterformen benutzt, um die Stromphasen aneinander vorbeizuführen, statt der sonst verbreiteten voll in drei Dimensionen verlaufenden Leiter mit nicht-flächiger neutraler Faser. Solche voll in drei Dimensionen verlaufenden Leiterformen sind aufwändig in der Herstellung (Formguss) und Montage, daher stellt es eine Verbesserung dar, dass das Gehäuse flächige Leiterformen erlaubt.

### Bezugszeichenliste:

- 1: Gehäuse für Schaltanlagenmodul
- 2: Schaltanlagenmodul
- 3: Gasraum /Kammer
- 4: Erste Gerade (Gerade in z-Richtung für erste Sammelschienen-Öffnungen)
- 4': Dritte Gerade (Gerade in z-Richtung für zweite Sammelschienen-Öffnungen)
- 6: Zweite Gerade (Gerade in y-Richtung für Leiterabgangs-Öffnungen)
- 8: Loch / Durchbruch
- 9: Einhüllender Quader
- 10: Oberes Sammelschienen-Gehäuseabschnitt
- 12: zylinderartiger Gehäuseabschnitt
- 12a, 12b: Rohrstummel
- 14: Obere Sammelschienen-Öffnung
- 14a: Normale
- 15: Flansch
- 16: Obere Sammelschienen-Öffnung
- 17: Flansch
- 20: Mittleres Sammelschienen-Gehäuseabschnitt
- 22: zylinderartiger Gehäuseabschnitt
- 22a, 22b: Rohrstummel
- 24: Mittlere Sammelschienen-Öffnung
- 24a: Normale
- 25: Flansch
- 26: Mittlere Sammelschienen-Öffnung
- 27: Flansch
- 30: Unteres Sammelschienen-Gehäuseabschnitt
- 32: zylinderartiger Gehäuseabschnitt
- 32a, 32b: Rohrstummel
- 34: Untere Sammelschienen-Öffnung
- 34a: Normale
- 35: Flansch
- 36: Untere Sammelschienen-Öffnung
- 37: Flansch
- 40: Betätigungswellen-Gehäuseabschnitt
- 42: Betätigungswellen-Öffnung
- 50: Seitlicher Leiterabgangs-Gehäuseabschnitt
- 52: Oberes Endstück des Leiterabgangs-Gehäuseabschnitts
- 53: zylinderartiger Gehäuseabschnitt
- 53a: Rohrstummel
- 54: Unteres Übergangs-Stück
- 56: Seitliche Leiterabgangs-Öffnung
- 57: Flansch
- 60: Mittlerer Leiterabgangs-Gehäuseabschnitt
- 62: Oberes Endstück des Leiterabgangs-Gehäuseabschnitts
- 63: zylinderartiger Gehäuseabschnitt
- 63a: Rohrstummel
- 65: Unteres Endstück des Leiterabgangs-Gehäuseabschnitts
- 66: Mittlere Leiterabgangs-Öffnung
- 67: Flansch
- 70: Seitlicher Leiterabgangs-Gehäuseabschnitt
- 72: Oberes Endstück des Leiterabgangs-Gehäuseabschnitts
- 73: zylinderartiger Gehäuseabschnitt
- 73a: Rohrstummel
- 74: Unteres Übergangs-Stück
- 76: Seitliche Leiterabgangs-Öffnung
- 77: Flansch
- 82: Kühlrippen
- 91, 92a, 92b: Zugang, Sichtfenster
- 110, 120,130: Sammelschienen-Nominalleiter
- 114, 124, 134: Enden der Sammelschienen-Leiterabschnitte
- 115, 125, 135: Isolator
- 140: Betätigungswelle
- 144: Betätigungsachse
- 150, 160, 170: Abgangs-Sammelschienenverbinder
- 151, 161, 171: Trennschalter
- 152, 162, 172: Trennstrecke
- 153, 163, 173: Schaltkolben
- 156, 166, 176: Abgangs-Nominalleiterabschnitte
- E1: Erste Öffnungs-Ebene
- E2: Zweite Öffnungs-Ebene
- E3: Dritte Öffnungs-Ebene
- E4: Abgangs-Normalebene

## Patentansprüche

1. Schaltanlagenmodul (2) für eine Schaltanlage mit einem Gehäuse (1), das einen gemeinsamen Gasraum (3) zur Aufnahme eines Isoliergases für das Schaltanlagenmodul bildet, das Schaltanlagenmodul umfassend:
- eine Sammelschienen-Leiteranordnung umfassend drei in dem gemeinsamen Gasraum aufgenommene Sammelschienen-Leiterabschnitte (110, 120, 130);
- eine Abgangsleiter-Anschlussgruppe mit drei Abgangsleiter-Öffnungen (56, 66, 76) und mit drei sich von innerhalb des Gehäuses zu einer jeweiligen der Abgangsleiter-Öffnungen (56, 66, 76) hin erstreckenden Abgangs-Leiterabschnitten (156, 166, 176); und
- drei Trennschalter (151, 161, 171), welche jeweils über eine Trennstelle (152, 162, 172) einen jeweiligen der Sammelschienen-Leiterabschnitte (110, 120, 130) mit einem jeweiligen der Abgangsleiterabschnitte (156, 166, 176) verbinden,
dadurch gekenntzeichnet, dass durch die drei Abgangsleiter-Öffnungen (56, 66, 76) eine Abgangs-Normalebene (E4) definiert ist, welche parallel zu den Mittelsenkrechten der Abgangsleiter-Öffnungen (56, 66, 76) ist, und wobei
die Trennstellen (152, 162, 172) räumlich so angeordnet sind, dass zumindest die Trennstelle (152, 162) eines ersten der Trennschalter (151, 161) auf einer ersten Seite der Abgangs-Normalebene (E4) angeordnet ist und die Trennstelle (172) eines zweiten der Trennschalter (171) auf einer zweiten, der ersten Seite gegenüberliegenden Seite der Abgangs-Normalebene (E4) angeordnet ist.

2. Schaltanlagenmodul nach Anspruch 1, wobei die Abgangs-Normalebene (E4) die Mittelsenkrechten von zumindest zweien, gegebenenfalls von jeder der Abgangsleiter-Öffnungen (56, 66, 76) enthält.

3. Schaltanlagenmodul nach Anspruch 1 oder 2, wobei die Sammelschienen-Leiterabschnitte (110, 120, 130) räumlich außerhalb der Abgangs-Normalebene (E4) angeordnet sind.

4. Schaltanlagenmodul nach einem der vorangehenden Ansprüche, wobei zumindest einer der Trennschalter (151, 161, 172) ein Schaltelement (153, 163, 173) aufweist, das zum Schalten geradlinig längs einer Schalt-Richtung beweglich ist, wobei in Ausführungsformen die Schalt-Richtung quer, insbesondere senkrecht, zur Abgangs-Normalebene (E4) verläuft.

5. Schaltanlagenmodul nach einem der vorangehenden Ansprüche, wobei die drei Trennschalter zumindest bezüglich ihres jeweiligen männlichen Schalt-Teils zueinander gleichartig gestaltet sind.

6. Schaltanlagenmodul nach der vorangehenden Ansprüche, weiter umfassend eine gemeinsame Betätigungswelle (140) zur Betätigung eines jeden der Trennschalter (151, 161, 171), wobei jeder der drei Trennschalter einen elektrischen Kontakt zwischen einem jeweiligen der Sammelschienen-Leiterabschnitte (110, 120, 130) und einem jeweiligen der Abgangs-Leiterabschnitte (156, 166, 176) schalten kann, und wobei die Betätigungswelle eine Betätigungsachse (144) aufweist.

7. Schaltanlagenmodul nach einem der vorangehenden Ansprüche, wobei für jeden der Trennschalter (151, 161, 171) die Trennstrecke (152, 162, 172) im Wesentlichen senkrecht zu der Abgangs-Normalebene (E4) verläuft.

8. Schaltanlagenmodul nach einem der vorangehenden Ansprüche, wobei der Gasraum ein zusammenhängender gemeinsamer Gasraum (3) ist, und wobei die drei Sammelschienen-Leiterabschnitte (110, 120, 130), die drei Abgangsleiterabschnitte (156, 166, 176) in dem gemeinsamen Gasraum angeordnet sind, und wobei in Ausführungsformen zumindest ein zusammenhängender sich über die drei Trennschalter (151, 161, 171) hinweg erstreckender Abschnitt der Betätigungswelle (140) in dem gemeinsamen Gasraum angeordnet ist.

9. Schaltanlagenmodul nach einem der vorangehenden Ansprüche, wobei das Gehäuse des Schaltanlagenmoduls umfasst:
- drei erste Sammelschienen-Öffnungen (14, 24, 34), in welchen erste Sammelschienen-Öffnungen jeweils einer der Sammelschienen-Leiterabschnitte (110, 120, 130) separat aufgenommen ist, wobei die drei ersten Sammelschienen-Öffnungen (14, 24, 34) flächenmäßig in einer ersten Öffnungs-Ebene (E1) und entlang einer ersten Geraden (4) angeordnet sind;
- drei zweite Sammelschienen-Öffnungen (16, 26, 36), in welchen zweite Sammelschienen-Öffnungen jeweils einer der Sammelschienen-Leiterabschnitte (110, 120, 130) separat aufgenommen ist, wobei die drei zweiten Sammelschienen-Öffnungen (16, 26, 36) auf einer den drei ersten Sammelschienen-Öffnungen (14, 24, 34) gegenüberliegenden Seite des Gehäuses angeordnet sind; und wobei
- die drei Abgangsleiter-Öffnungen (56, 66, 76) flächenmäßig in einer zweiten Öffnungs-Ebene (E2) und entlang einer zweiten Geraden (6) angeordnet sind,

10. Schaltanlagenmodul nach Anspruch 9, wobei dieAbgangs-Normalebene (E4) mittig zwischen der Äusseren (14) der Sammelschienen-Öffnungen (14, 24, 34) und der Mittleren (24) der ersten Sammelschienen-Öffnung (14, 24, 34) angeordnet ist.

11. Schaltanlagenmodul nach einem der vorangehenden Ansprüche, wobei die drei zweiten Sammelschienen-Öffnungen (16, 26, 36) flächenmäßig in einer dritten Öffnungs-Ebene (E3) und entlang einer dritten Gerade (4') angeordnet sind, wobei die dritte Öffnungs-Ebene (E3) parallel zu der ersten Öffnungs-Ebene (E1) ist und die dritte Gerade (4') parallel zur ersten Gerade (4) ist.

12. Schaltanlagenmodul nach einem der vorangehenden Ansprüche, wobei sich zwischen jeder der Trennstellen (152, 162, 172) und dem jeweiligen Sammelschienen-Leiterabschnitt (110, 120, 130) ein jeweiliger Abgangs-Sammelschienenverbinder (150, 160, 170) entlang einer jeweiligen Sammelschienen-Leiterabschnitts-Ebene (IIIa, IIIb, IIIc) erstreckt, wobei
die Sammelschienen-Leiterabschnitts-Ebenen (IIIa, IIIb, IIIc) zueinander parallel verlaufend angeordnet sind, und in Ausführungsformen parallel zu der ersten Öffnungs-Ebene (E1) und der dritten Öffnungs-Ebene (E3) sind und zwischen diesen angeordnet sind.

13. Schaltanlagenmodul nach einem der vorangehenden Ansprüche, wobei eine jede der drei zweiten Sammelschienen-Öffnungen (16, 26, 36) paarweise gegenüber einer jeweiligen der drei ersten Sammelschienen-Öffnungen (14, 24, 34) angeordnet ist und mit dieser ein jeweiliges Sammelschienen-Öffnungs-Paar bildet, und ein jeweiliger der Sammelschienen-Leiterabschnitte durchgehend und entlang einer Gerade dazwischen angeordnet ist.

14. Unterstation, beinhaltend ein Schaltanlagenmodul nach einem der vorangehenden Ansprüche und eine Sammelschiene, wobei die Sammelschienen-Leiterabschnitte einen Längsabschnitt einer Sammelschiene der Unterstation bilden.

## Claims

1. Switchgear assembly module (2) for a switchgear assembly with a housing (1), which forms a common gas space (3) for accommodating an insulating gas for the switchgear assembly module, the switchgear assembly module comprising:
- a busbar conductor arrangement comprising three busbar conductor sections (110, 120, 130), which are accommodated in the common gas space;
- an outgoing conductor connection group with three outgoing conductor openings (56, 66, 76) and with three outgoing conductor sections (156, 166, 176), which extend from within the housing towards a respective one of the outgoing conductor openings (56, 66, 76); and
- three switch disconnectors (151, 161, 171), which each connect a respective one of the busbar conductor sections (110, 120, 130) to a respective one of the outgoing conductor sections (156, 166, 176) via a disconnection point (152, 162, 172),
**characterized in that** an outgoing normal plane (E4) is defined by the three outgoing conductor openings (56, 66, 76) and is parallel to the mid-perpendiculars of the outgoing conductor openings (56, 66, 76), and wherein
the disconnection points (152, 162, 172) are arranged spatially in such a way that at least the disconnection point (152, 162) of a first one of the switch disconnectors (151, 161) is arranged on a first side of the outgoing normal plane (E4) and the disconnection point (172) of a second one of the switch disconnectors (171) is arranged on a second side, which is opposite the first side, of the outgoing normal plane (E4).

2. Switchgear assembly module according to Claim 1, wherein the outgoing normal plane (E4) contains the mid-perpendiculars of at least two, possibly of each of the outgoing conductor openings (56, 66, 76).

3. Switchgear assembly module according to Claim 1 or 2, wherein the busbar conductor sections (110, 120, 130) are arranged spatially outside the outgoing normal plane (E4) .

4. Switchgear assembly module according to one of the preceding claims, wherein at least one of the switch disconnectors (151, 161, 172) has a switching element (153, 163, 173) which is capable of moving in a straight line along a switching direction for switching purposes, wherein in embodiments, the switching direction runs transversely, in particular perpendicular, to the outgoing normal plane (E4).

5. Switchgear assembly module according to one of the preceding claims, wherein the three switch disconnectors are designed to be identical to one another, at least with respect to their respective male switching part.

6. Switchgear assembly module according to one of the preceding claims, further comprising a common actuating shaft (140) for actuating each of the switch disconnectors (151, 161, 171), wherein each of the three switch disconnectors can switch an electrical contact between a respective one of the busbar conductor sections (110, 120, 130) and a respective one of the outgoing conductor sections (156, 166, 176), and wherein the actuating shaft has an actuation axis (144).

7. Switchgear assembly module according to one of the preceding claims, wherein the disconnection path (152, 162, 172) runs substantially perpendicular to the outgoing normal plane (E4) for each of the switch disconnectors (151, 161, 171).

8. Switchgear assembly module according to one of the preceding claims, wherein the gas space is a continuous, common gas space (3), and wherein the three busbar conductor sections (110, 120, 130), and the three outgoing conductor sections (156, 166, 176) are arranged in the common gas space, and wherein in embodiments, at least one continuous section of the actuating shaft (140), which section extends beyond the three switch disconnectors (151, 161, 171) is arranged in the common gas space.

9. Switchgear assembly module according to one of the preceding claims, wherein the housing of the switchgear assembly module comprises:
- three first busbar openings (14, 24, 34), in which first busbar openings of a respective one of the busbar conductor sections (110, 120, 130) are accommodated separately, wherein the three first busbar openings (14, 24, 34) are arranged areally in a first opening plane (E1) and along a first straight line (4);
- three second busbar openings (16, 26, 36), in which second busbar openings of a respective one of the busbar conductor sections (110, 120, 130) are accommodated separately, wherein the three second busbar openings (16, 26, 36) are arranged on a side of the housing which is opposite the three first busbar openings (14, 24, 34); and wherein
- the three outgoing conductor openings (56, 66, 76) are arranged areally in a second opening plane (E2) and along a second straight line (6).

10. Switchgear assembly module according to Claim 9, wherein the outgoing normal plane (E4) is arranged centrally between the outer one (14) of the busbar openings (14, 24, 34) and the central one (24) of the first busbar opening (14, 24, 34).

11. Switchgear assembly module according to one of the preceding claims, wherein the three second busbar openings (16, 26, 36) are arranged areally in a third opening plane (E3) and along a third straight line (4'), wherein the third opening plane (E3) is parallel to the first opening plane (E1) and the third straight line (4') is parallel to the first straight line (4).

12. Switchgear assembly module according to one of the preceding claims, wherein a respective outgoing busbar connector (150, 160, 170) extends along a respective busbar conductor section plane (IIIa, IIIb, IIIc) between each of the disconnection points (152, 162, 172) and the respective busbar conductor section (110, 120, 130), wherein
the busbar conductor section planes (IIIa, IIIb, IIIc) are arranged so as to run parallel to one another and, in embodiments, are parallel to the first opening plane (E1) and the third opening plane (E3) and are arranged between said planes.

13. Switchgear assembly module according to one of the preceding claims, wherein each of the three second busbar openings (16, 26, 36) is arranged in pairs with respect to a respective one of the three first busbar openings (14, 24, 34) and with this opening forms a respective busbar opening pair, and a respective one of the busbar conductor sections is arranged continuously and along a straight line therebetween.

14. Substation, containing a switchgear assembly module according to one of the preceding claims and a busbar, wherein the busbar conductor sections form a longitudinal section of a busbar of the substation.

## Revendications

1. Module de tableau de distribution (2) pour un tableau de distribution comprenant un boîtier (1) qui forme un espace à gaz commun (3) destiné à accueillir un gaz isolant pour le module de tableau de distribution, le module de tableau de distribution comprenant
- un arrangement de conducteur de barre-bus comprenant trois portions de conducteur de barre-bus (110, 120, 130) accueillies dans l'espace à gaz commun ;
- un groupe de raccordement de conducteur de départ pourvu de trois ouvertures à conducteur de départ (56, 66, 76) et pourvu de trois portions de conducteur de départ (156, 166, 176) qui s'étendent depuis l'intérieur du boîtier vers l'une respective des ouvertures à conducteur de départ (56, 66, 76) ; et
- trois sectionneurs (151, 161, 171) qui relient, respectivement par le biais d'un point de sectionnement (152, 162, 172), l'une respective des portions de conducteur de barre-bus (110, 120, 130) avec l'une respective des portions de conducteur de départ (156, 166, 176),
**caractérisé en ce qu'**un plan normal de départ (E4) est défini par les trois ouvertures à conducteur de départ (56, 66, 76), lequel est parallèle aux médiatrices des ouvertures à conducteur de départ (56, 66, 76), et
les points de sectionnement (152, 162, 172) étant disposés spatialement de telle sorte qu'au moins le point de sectionnement (152, 162) d'un premier des sectionneurs (151, 161) est disposé sur un premier côté du plan normal de départ (E4) et le point de sectionnement (172) d'un deuxième des sectionneurs (171) est disposé sur un deuxième côté du plan normal de départ (E4) à l'opposé du premier côté.

2. Module de tableau de distribution selon la revendication 1, avec lequel le plan normal de départ (E4) contient les médiatrices d'au moins deux, éventuellement de chacune des ouvertures à conducteur de départ (56, 66, 76).

3. Module de tableau de distribution selon la revendication 1 ou 2, avec lequel les portions de conducteur de barre-bus (110, 120, 130) sont disposées spatialement à l'extérieur du plan normal de départ (E4).

4. Module de tableau de distribution selon l'une des revendications précédentes, avec lequel au moins l'un des sectionneurs (151, 161, 172) possède un élément de commutation (153, 163, 173) qui, pour commuter, est mobile en ligne droite le long d'un sens de commutation, dans certaines formes de réalisation le sens de commutation s'étendant transversalement, notamment perpendiculairement, au plan normal de départ (E4).

5. Module de tableau de distribution selon l'une des revendications précédentes, avec lequel les trois sectionneurs sont de configuration identique l'un par rapport à l'autre, au moins pour ce qui concerne leur partie de commutation mâle respective.

6. Module de tableau de distribution selon l'une des revendications précédentes, comprenant en outre un arbre d'actionnement (140) commun destiné à actionner chacun des sectionneurs (151, 161, 171), chacun des trois sectionneurs pouvant commuter un contact électrique entre l'une respective des portions de conducteur de barre-bus (110, 120, 130) et l'une respective des portions de conducteur de départ (156, 166, 176), et l'arbre d'actionnement possédant un axe d'actionnement (144).

7. Module de tableau de distribution selon l'une des revendications précédentes, avec lequel, pour chacun des sectionneurs (151, 161, 171), la distance de sectionnement (152, 162, 172) s'étend sensiblement perpendiculairement au plan normal de départ (E4).

8. Module de tableau de distribution selon l'une des revendications précédentes, avec lequel l'espace à gaz est un espace à gaz (3) commun contigu, et avec lequel les trois portions de conducteur de barre-bus (110, 120, 130), les trois portions de conducteur de départ (156, 166, 176) sont disposées dans l'espace à gaz commun, et avec lequel, dans certaines formes de réalisation, au moins une portion contiguë de l'arbre d'actionnement (140) qui s'étend sur les trois sectionneurs (151, 161, 171) est disposée dans l'espace à gaz commun.

9. Module de tableau de distribution selon l'une des revendications précédentes, avec lequel le boîtier du module de tableau de distribution comprend :
- trois premières ouvertures de barre-bus (14, 24, 34), premières ouvertures de barre-bus dans lesquelles est respectivement accueillie séparément l'une des portions de conducteur de barre-bus (110, 120, 130), les trois premières ouvertures de barre-bus (14, 24, 34) étant disposées surfaciquement dans un premier plan d'ouverture (E1) et le long d'une première droite (4) ;
- trois deuxièmes ouvertures de barre-bus (16, 26, 36), deuxièmes ouvertures de barre-bus dans lesquelles est respectivement accueillie séparément l'une des portions de conducteur de barre-bus (110, 120, 130), les trois deuxièmes ouvertures de barre-bus (16, 26, 36) étant disposées sur le côté du boîtier à l'opposé des trois premières ouvertures de barre-bus (14, 24, 34) ; et
- les trois ouvertures à conducteur de départ (56, 66, 76) étant disposées surfaciquement dans un deuxième plan d'ouverture (E2) et le long d'une deuxième droite (6).

10. Module de tableau de distribution selon la revendication 9, avec lequel le plan normal de départ (E4) est disposé au centre entre celle le plus à l'extérieur (14) des ouvertures de barre-bus (14, 24, 34) et celle au centre (24) de la première ouverture de barre-bus (14, 24, 34).

11. Module de tableau de distribution selon l'une des revendications précédentes, avec lequel les trois deuxièmes ouvertures de barre-bus (16, 26, 36) sont disposées surfaciquement dans un troisième plan d'ouverture (E3) et le long d'une troisième droite (4'), le troisième plan d'ouverture (E3) étant parallèle au premier plan d'ouverture (E1) et la troisième droite (4') parallèle à la première droite (4).

12. Module de tableau de distribution selon l'une des revendications précédentes, avec lequel un élément de liaison de barre-bus de départ (150, 160, 170) respectif s'étend entre chacun des points de sectionnement (152, 162, 172) et la portion de conducteur de barre-bus (110, 120, 130) respective le long d'un plan de portion de conducteur de barre-bus (IIIa, IIIb, IIIc) respectif, les plans de portion de conducteur de barre-bus (IIIa, IIIb, IIIc) étant disposés parallèlement l'un à l'autre et, dans certaines formes de réalisation, sont parallèles au premier plan d'ouverture (E1) et au troisième plan d'ouverture (E3) et sont disposés entre ceux-ci.

13. Module de tableau de distribution selon l'une des revendications précédentes, avec lequel chacune des trois deuxièmes ouvertures de barre-bus (16, 26, 36) est disposée par paire à l'opposé de l'une respective des trois premières ouvertures de barre-bus (14, 24, 34) et forme avec celle-ci une paire d'ouvertures de barre-bus correspondante, et l'une respective des portions de conducteur de barre-bus est disposée d'un seul tenant et le long d'une droite entre elles.

14. Sous-station, contenant un module de tableau de distribution selon l'une des revendications précédentes et une barre-bus, les portions de conducteur de barre-bus formant une portion longitudinale d'une barre-bus de la sous-station.
